(19) Europäisches Patentamt
European Patent Office
Office européen des brevets

(11) **EP 3 644 497 B1**

(12) **EUROPÄISCHE PATENTSCHRIFT**

(45) Veröffentlichungstag und Bekanntmachung des Hinweises auf die Patenterteilung:
**02.03.2022 Patentblatt 2022/09**

(21) Anmeldenummer: **18202344.0**

(22) Anmeldetag: **24.10.2018**

(51) Internationale Patentklassifikation (IPC):
*H02P 9/10* (2006.01)    *H02J 3/38* (2006.01)
*H02J 3/46* (2006.01)    *H02J 3/50* (2006.01)

(52) Gemeinsame Patentklassifikation (CPC):
**H02P 9/105; H02J 3/381; H02J 3/46; H02J 3/50;**
H02J 2300/28

(54) **VERFAHREN UND VORRICHTUNG ZUR VIRTUELLEN MASSENTRÄGHEITSSTEUERUNG FÜR KRAFTWERKE MIT DOPPELT GESPEISTER ASYNCHRONMASCHINE**

METHOD AND DEVICE FOR VIRTUAL INERTIA CONTROL FOR POWER STATIONS WITH DOUBLE-FED ASYNCHRONOUS MACHINE

PROCÉDÉ ET DISPOSITIF DE COMMANDE VIRTUELLE D'INERTIE DE MASSE POUR CENTRALES POURVUES DE MACHINE ASYNCHRONE À DOUBLE ALIMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.04.2020 Patentblatt 2020/18**

(73) Patentinhaber: **GE Energy Power Conversion Technology Ltd.**
**Warwickshire CV21 1BU (GB)**

(72) Erfinder: **GESKE, Martin**
**12277 Berlin (DE)**

(74) Vertreter: **Rüger Abel Patentanwälte PartGmbB**
**Patentanwälte**
**Webergasse 3**
**73728 Esslingen a. N. (DE)**

(56) Entgegenhaltungen:
DE-A1-102009 014 012      DE-A1-102010 014 165
DE-A1-102016 101 468

**Beschreibung**

Die vorliegende Erfindung betrifft allgemein Verfahren und Vorrichtungen zur virtuellen Massenträgheitssteuerung für Kraftwerke mit doppelt gespeister Asynchronmaschine und insbesondere ein Verfahren zum Betreiben eines Kraftwerks mit einer doppelt gespeisten Asynchronmaschine, eine Umrichtervorrichtung hierfür und ein Kraftwerk mit dieser.

Angesichts expandierender Netze zur Erzeugung und Verteilung elektrischer Energie mit steigender Anzahl von Kraftwerken unterschiedlicher Bauarten und verstärkter Nutzung regenerativer Energien gewinnen Windkraftanlagen zunehmend an Bedeutung. Die meisten Windkraftanlagen werden mit variabler Rotordrehzahl betrieben, wobei Frequenzumrichter eingesetzt werden, um die variablen Ausgangsfrequenzen des rotorseitigen Generators an die Netzfrequenz anzupassen. Ein weit verbreitetes Anlagenkonzept verwendet einen direkt betriebenen Synchrongenerator mit permanent-magnetischer Erregung oder mit elektrischer Erregung. Der Umrichter muss dann aber hinsichtlich seiner Nennleistung in etwa entsprechend der Anlagenleistung ausgelegt werden. Ein bevorzugtes Konzept verwendet eine doppelt gespeiste Asynchronmaschine (DGASM), die eine Schleifringrotor-Asynchronmaschine ist, die sowohl über Stator- als auch über Rotoranschlüsse gespeist wird. Für die Anwendung ist der Stator der Asynchronmaschine in der Regel über einen Netztransformator oder auch direkt mit einem elektrischen Netz verbunden, während der Rotor mit dem Netz oder Netztransformator über einen Frequenzumrichter verbunden ist, der zur Regelung der Drehzahl, der Wirk- und Blindleistung dient. Dies ermöglicht einen übersynchronen sowie einen untersynchronen Betrieb zur Netzfrequenz, und damit ist die Generatordrehzahl variabel. Nur ein Teil der Leistung muss über den Umrichter an die gewünschte Frequenz und Leistung angepasst werden. Insofern kann der Umrichter kleiner, kostengünstiger und verlustärmer als ein vergleichbarer Synchrongenerator gebaut werden, woraus sich auch ein besserer Wirkungsgrad des Systems insgesamt ergibt. Zu weiteren Vorteilen der doppelt gespeisten Asynchronmaschine gegenüber Synchronmaschinen gehören auch ein hoher Betriebswirkungsgrad unter Teillast, die Fähigkeit zur getrennten Regelung der Blindleistung und der Wirkleistung, die Fähigkeit zur Leistungsfaktorsteuerung und eine höhere Dynamik.

In letzter Zeit verändern sich elektrische Energiesysteme von zentralen Versorgungseinrichtungen der Kraftwerke hin zu einer vermehrt dezentralen Einspeisung aus Photovoltaiksystemen und Windkraftanlagen. Klassische Kraftwerke sind überwiegend über Generatoren mit dem elektrischen Netz gekoppelt, wohingegen die Netzkopplung erneuerbarer Energien und dezentraler Speicher vornehmlich über Um- bzw. Wechselrichter erfolgt. Die Generatoren klassischer Kraftwerke verfügen über rotierende Massen, deren Trägheit bei Schwankungen, insbesondere plötzlichen Abfällen der Netzfrequenz z.B. infolge eines plötzlichen Verlustes von Einspeiseleistung oder einer sprunghaft gestiegenen Lastanforderung zur Stützung der Netzfrequenz genutzt werden kann. Der Generator kann durch die gespeicherte Energie in der rotierenden Masse die Systemfrequenz stützen, bis nach etwa 10 bis 30 Sekunden andere Erzeugereinheiten die Frequenzstützung im Rahmen der Primärregelung übernehmen. Mit dem steigenden Anteil der Einspeisung aus regenerativen Energiequellen über Stromrichter im Verhältnis zu klassischen Kraftwerken verringert sich der Anteil gespeicherter kinetischer Energie der Kraftwerksgeneratoren, die im Bedarfsfall zur dynamischen Stützung der Netzfrequenz herangezogen werden könnte. Es besteht jedoch weiterhin ein Bedarf bzw. eine Anforderung nach einer solchen dynamischen Netzfrequenzstützung sowohl in Verbundnetzen als auch in einem Inselnetz.

Eine dynamische Frequenzstützung bei einem plötzlichen Abfall der Netzfrequenz kann allgemein durch eine erhöhte Abgabe von Wirkleistung unter Berücksichtigung der Statik des Wechselstromnetzes erfolgen. Die hohe Dynamik von leistungselektronischen Bauelementen, wie MOSFETs, IGBTs und dgl., die in Umrichtern zum Einsatz kommen, ist gut geeignet, um Energie aus einem Speicherelement als Wirkleistung mit Hilfe des Umrichters unverzüglich in das zu stützende elektrische Netz abzugeben. Bei Windkraftanlagen kann die kinetische Energie der rotierenden Elemente, insbesondere Rotorblätter, zur erhöhten Leistungsabgabe verwendet werden. Hierfür kann z.B. die Anlagenkennlinie derart modifiziert betrieben werden, dass das Drehmoment und die Wirkleistungsabgabe über die nominelle Anlagenleistung hinaus erhöht werden, wobei die Rotationsgeschwindigkeit langsam abnimmt und Rotationsenergie abgebaut wird. Das erläuterte Prinzip wird als virtuelle Massenträgheit (VM) oder die Emulation virtueller Massenträgheit bezeichnet und ist bspw. in Xiaorong Zhu et.al., "Virtual inertia control of DFIG-based wind turbines for dynamic grid frequency support", Proceedings of the IET Renewable Power Generation Conference, Edinburgh, UK, 6.-8. September 2011, S. 1-6, beschrieben.

Für Windkraftanlagen mit doppelt gespeister Asynchronmaschine (DGASM) wird zur Emulation der Massenträgheit die Anlagenkennlinie von Leistung zu Drehzahl zu einer virtuellen Massenträgheitskennlinie derart verändert, dass für einen weiten Drehzahlbereich die Anlagenleistung nahe an der geforderten bzw. auch maximal möglichen Ausgangsleistung liegt. Der VM-Betrieb erfolgt über eine erhöhte Abnahme der elektrischen Leistung, die in diesem Falle die mechanische Leistung bzw. die Windleistung der Anlage übersteigt, was eine Drehzahlabsenkung und eine langsame Abnahme der Rotationsenergie zur Folge hat. Für eine Drehzahl oberhalb der Synchrondrehzahl $n_{syn}$ kann die abgegebene Leistung vorteilhafterweise oberhalb der Nennleistung und unterhalb oder gleich der maximalen Leistung der Anlage liegen. Der VM-Betriebsmodus kann etwa 10 Sekunden oder mehr in Anspruch nehmen.

Aufgrund der Drehzahlverriegelung der DGASM in der VM-Betriebsart geht die Maschine sehr langsam von einem übersynchronen in einen untersynchronen Betrieb über und durchläuft dabei im allgemeinen Fall den Synchronpunkt bei $n_{syn}$. Das Durchfahren des Synchronpunktes hat jedoch eine deutlich erhöhte Belastung der Leistungshalbleiterbauelemente des Umrichters, insbesondere des rotorseitigen Stromrichters zur Folge, da die sehr geringen Rotorfrequenzen im Bereich der Synchrondrehzahl eine deutlich höhere Sperrschichttemperatur zur Folge haben.

Ein Nachteil der doppelt gespeisten Asynchronmaschinen ist es nämlich, dass bei einem Betrieb mit zunehmender Nähe zu ihrer Synchrondrehzahl die zyklische Wärmebelastung der Leistungshalbleiterkomponenten und anderer Bauelemente deutlich steigt. Halbleitervorrichtungen, die in der Leistungselektronik der Umrichter verwendet werden, sind für beträchtliche Sperrschichttemperaturschwankungen anfällig, welche aus dem Betrieb der Maschine nahe um die Synchrondrehzahl resultieren, wodurch die Lebensdauer der Umrichter reduziert werden kann. Da die Frequenz des Rotorstroms in einer doppelt gespeisten Asynchronmaschine durch die Statorflussfrequenz, somit die Netzfrequenz, und die Rotordrehzahl bestimmt ist und ein Betrieb nahe an der Synchrondrehzahl zu einer niedrigen Rotorstromfrequenz führt, rufen diese Rotorströme eine beträchtliche Wärmebelastung der Halbleitervorrichtungen hervor. Insofern ist auch die maximale Leistungsabgabe der Windkraftanlage und des Umrichters in der Nähe des Synchronpunktes im Vergleich zu einem Betrieb bei Nenndrehzahl im übersynchronen Betrieb deutlich limitiert.

Nachdem der VM-Betrieb nach ungefähr 10 Sekunden beendet wird, wechselt die Windkraftanlage von der VM-Kennlinie zurück auf die Anlagenkennlinie für den normalen Betrieb. Dabei nimmt die reduzierte Drehzahl wieder zu und läuft auf dieser Kennlinie auf einen Arbeitspunkt mit höherer Rotordrehzahl zu. Dieser Betriebsmodusübergang wird als Drehzahlerholung bezeichnet. Bei der Drehzahlerholung wird der Synchronpunkt erneut durchlaufen und die thermische Belastung der Halbleiterleistungsbauelemente ist sehr hoch, zumal durch den vorherigen VM-Betrieb bereits deutlich höhere Sperrschichttemperaturen als Vorbedingung für die Drehzahlerholung vorgegeben sind. In diesem Fall kann unter Umständen die thermische Marge nahezu Null sein, oder es kann eine zusätzliche Begrenzung der maximalen Stromgrenzwerte notwendig sein, wodurch die Anlagenleistung hinsichtlich der Wirk- und Blindleistungsbereitstellung herabgesetzt wird. Dies gilt es möglichst zu vermeiden.

Ferner können der Umrichter und die Windkraftanlage auch für das Durchfahren möglicher Netzfehler durch herabgesetzte Stromgrenzen eingeschränkt sein. Netzbetreiber fordern bei bestimmten Netzfehlern, wie etwa durch Kurzschlüsse verursachten Spannungseinbrüchen, eine sogenannte Unterspannungs-Durchkopplung der Anlage zur dynamischen Stützung des Netzes. In dieser Betriebsart wird der Umrichter ebenfalls sehr stark durch hohe Ströme belastet, da er entsprechend der Anforderung hinsichtlich der Spannungseinbruchtiefe teilweise sogar mehr als die volle Wirk- und Blindleistung am Anschlusspunkt einspeisen muss. Außerdem beaufschlagt der Rotor den rotorseitigen Stromrichter des Frequenzumrichters mit sehr hohen Strömen, da die geringe netzseitige Restspannung dort die Magnetisierung abbaut. Wird durch den VM-Betrieb die thermische Marge vollständig aufgebraucht, so kann für einen plötzlichen Netzspannungseinbruch keine dynamische Netzstützung mehr erfolgen. Eine derartige dynamische Netzstützung wird aber von Netzbetreibern zunehmend bedingungslos gefordert.

Es ist bekannt, dass der maximale Strom für den kritischen Drehzahlbereich um die Synchrondrehzahl herum erhöht werden kann, wenn die Halbleiterverluste zur Reduktion der Sperrschichttemperatur verringert werden. Hierzu können selektierte Bauelemente mit geringen Leitverlusten eingesetzt werden, was jedoch die Kosten für Produktion und Lagerhaltung erhöht. Es kann auch eine Überdimensionierung der Leistungshalbleiter des Umrichters und/oder der Kühlanlage zur verbesserten Kühlung hilfreich sein. Diese führt jedoch zu höheren Investitionskosten, die für den relativ seltenen Fall der Frequenzstützung durch den VM-Betrieb meist nicht zu rechtfertigen sind.

Es kann auch die Schaltfrequenz in einem entsprechenden Arbeitspunkt herabgesetzt werden, um den möglichen Ausgangsstrom zu erhöhen. Eine Anpassung der Schaltfrequenz in Abhängigkeit vom Arbeitspunkt unter Berücksichtigung der maximalen Sperrschichttemperatur ist bspw. aus der US 5 610 543 A bekannt. Eine Verringerung der Schaltfrequenz führt jedoch zu einem Anstieg der Oberschwingungen von Strom und Spannung, die einen höheren Filteraufwand erfordern, um entsprechende Anschlussbedingungen einhalten zu können.

Aus der US 8 035 240 B2 ist ein Regler mit einer modifizierten Drehzahl-Drehmoment-Charakteristik für den Drehzahlbereich nahe des Synchronpunktes bekannt. Der Regler verändert bei Bedarf die Anlagencharakteristik hinsichtlich der Drehmoment-Drehzahl-Charakteristik nahe des Synchronpunktes in der Art, dass die Sperrschichttemperaturen der Leistungshalbleiterschalter und der geforderte Strom des rotorseitigen Stromrichters begrenzt werden können, um zulässige Grenzwerte nicht zu überschreiten. Die Parameter und Grenzwerte des Reglers basieren auf den Sperrschichttemperaturen der verwendeten Leistungshalbleiter im Betrieb, deren Zuverlässigkeitsdaten und/oder den entsprechenden Maximalströmen. Dieser Lösungsansatz erfordert es, dass die Anlagencharakteristik auf der Systemebene angepasst werden muss, um den Umrichter vor Überlast zu schützen. Eine technische Lösung für den Umrichter, die von der Windkraftanlage und dem System als solche unabhängig ist, wäre vorzuziehen.

US 2016/0348646 A1 beschreibt allgemein, wie die Ausgangsleistung einer DGASM-basierten Windkraftanlage mit Hilfe einer oder mehrerer Temperaturmessungen an ausgewählten Anlagenkomponenten nachgeführt werden kann. Diese Art der Leistungsbegrenzung ist einem zeitlichen Verzug aufgrund der thermischen Zeitkonstanten unterworfen. Für die Leistungshalbleiterschalter der Umrichter wäre diese Art der Strombegrenzung zu träge. Eine Temperaturmessung an oder in der Nähe der Bodenplatte der Anlage in Verbindung mit den Kühlkörpern ergibt thermische Zeitkonstanten im Sekundenbereich, während Leistungshalbleiter entsprechend der transienten thermischen Impedanz Zeitkonstanten im Bereich von Mikro- bis Millisekunden aufweisen.

US 9 548 690 B2 beschreibt ein System und Verfahren für Windkraftanlagen mit einer DGASM, die die Reglerparameter für den Stromregler in Abhängigkeit von der Anlagendrehzahl anpassen. Für einen VM-Überlastfall mit einer Drehzahlabsenkung im Sekundenbereich würde eine derartige Lösung keinen Vorteil bieten, da für diesen Zeitbereich die Reglerdynamik keinen Einfluss nimmt.

WO 2015/014368 A1 beschreibt eine Methode, die eine kurzzeitige Überlast einer Windkraftanlage durch eine Simulation der Last mechanischer Komponenten und einen Vergleich der entsprechenden Komponentenauslegung bewertet. Dieser Ansatz betrachtet zusätzliche Auslegungsreserven einzelner Komponenten, um diese für eine kurzzeitige Überlast nutzen zu können. Er erfordert eine Detailkenntnis der Komponenten, bietet jedoch keine Möglichkeit zum optimierten Einsatz des Stromrichters bei Überlast im Bereich der Synchrondrehzahl in einem VM-Betrieb.

DE 10 2010 014 165 A1 beschreibt eine Windenergieanlage mit einem Windrotor, einem damit angetriebenen doppelt gespeisten Asynchrongenerator, einem Umrichter, einer Drehzahlregelung und einer Umrichtersteuerung. Die Drehzahlregelung bestimmt einen Sollwert für die Drehzahl des Windrotors und wirkt mit der Umrichtersteuerung in der Weise zusammen, dass ein solches elektrisches Moment eingestellt wird, um die entsprechende Drehzahl zu erreichen. Eine Zusatzregelung ist dazu vorgesehen, bedarfsweise unter Berücksichtigung eines Rotorträgheitsmoments ein Drehzahländerungssignal zu erzeugen, das das Solldrehzahlsignal modifiziert, um durch Erniedrigung der Drehzahl dem Windrotor kontrolliert kinetische Energie zu entziehen, die von dem Generator in zusätzliche elektrische Energie umgewandelt wird. Auf diese Weise kann durch Drehzahländerung gezielt Primärregelleistung auch bei instationären Windbedingungen zur Verfügung gestellt werden. Ein Grenzwertüberwachungsmodul ist dazu vorgesehen, die Zusatzregelung in Abhängigkeit von einer Grenzwertverletzung zu begrenzen oder zu deaktivieren, um eine Überlastung der Windenergieanlage durch die Bereitstellung der Zusatzleistung zu vermeiden. Derartige Grenzwerte können elektrotechnische Auslegungsgrenzen, wie Schein-, Wirk- oder Blindströme, Spannungen oder thermische Grenzen an den Halbleitern des Umrichters sein. Insbesondere kann bei einer Überschreitung eines drehzahlabhängigen Grenzdrehmoments das Moment im Bereich der Synchrondrehzahl stark begrenzt werden, um den Umrichter vor einer thermischen Überlastung zu schützen.

Ausgehend hiervon ist es Aufgabe der vorliegenden Erfindung, Maßnahmen zur Steuerung der Ströme und Leistungsverhältnisse innerhalb eines Kraftwerks, insbesondere einer Windkraftanlage, mit einer doppelt gespeisten Asynchronmaschine (DGASM) zu schaffen, die eine wirksame Begrenzung der thermischen Last im Bereich der Synchrondrehzahl im Betrieb der virtuellen Massenträgheit (VM) ermöglichen. Dies vorzugsweise, ohne das übergeordnete System oder die Anlagencharakteristik des Kraftwerks dafür anpassen zu müssen.

Diese Aufgabe wird durch das Verfahren zum Betreiben eines Kraftwerks mit einer doppelt gespeisten Asynchronmaschine mit den Merkmalen des unabhängigen Anspruchs 1 und die Umrichtervorrichtung für eine doppelt gespeiste Asynchronmaschine eines Kraftwerks nach Anspruch 20 gelöst. Besonders vorteilhafte Ausführungsformen der Erfindung sind Gegenstand der abhängigen Ansprüche.

Gemäß einem Aspekt der Erfindung ist ein Verfahren zum Betreiben eines Kraftwerks mit einer doppelt gespeisten Asynchronmaschine geschaffen, deren Stator mit einem elektrischen Netz (über einen Netztransformator oder direkt) verbunden ist und deren Rotor über einen Umrichter mit dem elektrischen Netz verbunden ist. Das Kraftwerk weist einen normalen Betriebsmodus, in dem es entsprechend einer vorbestimmten Anlagenkennlinie betrieben wird, um nominelle Leistung in ein Netz einzuspeisen, und ferner einen Betriebsmodus der virtuellen Massenträgheit (VM) auf, in dem die Leistungseinspeisung über die nominelle Anlagenleistung hinaus erhöht wird, während Rotationsenergie des Rotors abgebaut wird. Das Verfahren in dem Betriebsmodus der virtuellen Massenträgheit (VM-Betriebsmodus) weist den Schritt des Bestimmens einer aktuellen Rotordrehzahl und einer aktuellen Drehzahländerungsrate des Rotors auf. Alternativ weist das Verfahren ein Bestimmen einer aktuellen Rotorfrequenz und Rotorfrequenzänderungsrate auf. Das Verfahren weist ferner den Schritt des Reduzierens eines aktuellen maximalen Stromgrenzwertes für einen durch den Umrichter bereitzustellenden Rotorstrom in Abhängigkeit von den ermittelten aktuellen Werten der Drehzahl und der Drehzahländerungsrate bzw. Frequenz und Frequenzänderungsrate des Rotors auf, wenn die aktuelle mechanische Drehzahl des Rotors in einem vorbestimmten Drehzahlbereich um eine Synchrondrehzahl des Rotors herum oder die aktuelle Rotorfrequenz in einem vorbestimmten Bereich um eine Nullfrequenz des Rotors liegt. Das Verfahren weist ferner den Schritt des Bestimmens eines aktuellen Sollwertes für den Rotorstrom basierend auf einer zwischen dem elektrischen Netz und der doppelt gespeisten Asynchronmaschine (DGASM) bereitzustellenden Leistung auf. Das Verfahren weist ferner den Schritt des Ansteuerns des Umrichters auf, um pulsartig sinusförmige Spannungen und Ströme mit dem aktuellen Rotorstromsollwert oder, falls der aktuelle Rotorstromsollwert den aktuellen maximalen Rotorstromgrenzwert erreicht oder überschreitet, mit dem aktuellen maximalen Rotorstromgrenzwert an den Rotor zu schalten.

Erfindungsgemäß wird somit der maximale Grenzwert für den Rotorstrom in der Umgebung der Synchrondrehzahl (bzw. der Rotornullfrequenz) in Abhängigkeit von sowohl der Drehzahl, insbesondere der Nähe der aktuellen Drehzahl zu der Synchrondrehzahl (der Nähe der Rotorfrequenz zu der Nullfrequenz), als auch der Drehzahländerungsrate des Rotors (der Änderungsrate der Rotorfrequenz), also Geschwindigkeit der Annäherung an die Synchrondrehzahl (Rotornullfrequenz) bzw. des Durchlaufens derselben, herabgesetzt bzw. zunehmend begrenzt. Dadurch kann die Last im Bereich der Synchrondrehzahl entsprechend dem individuellen VM-Betrieb wirksam begrenzt werden, ohne dass das übergeordnete System oder die Anlagencharakteristik des Kraftwerks dafür angepasst werden muss. Die Maßnahme kann vollständig auf der Ebene des Umrichters unter Kenntnis der Anlagencharakteristik und messbarer Größen an dem System realisiert werden. Dies bietet den Vorteil, dass nur eine Systemkomponente entsprechend parametrisiert und angepasst werden muss, während die Regelung und Steuerung des Kraftwerks hierfür nicht angepasst werden muss. Es können auch bestehende DGASM-basierte Kraftwerke schnell und leicht um die erfindungsgemäße Sicherheitsfunktion erweitert werden. Die Erfindung stellt sicher, dass ein VM-Betrieb oberhalb der Nennleistung zur Frequenz- oder Spannungsstützung des Netzes bewerkstelligt werden kann, ohne dass die maximale thermische Belastung und die maximalen Sperrschichttemperaturen von Leistungshalbleiterschaltern von Umrichtern, wie z.B. MOSFETs, IGBTs oder dgl., und zugehörigen Freilaufdioden, überschritten werden und ohne dass die thermische Marge durch den VM-Betrieb vollständig aufgebracht wird. Somit kann auch sichergestellt werden, dass bei einem Netzspannungseinbruch stets eine dynamische Netzstützung erfolgen kann.

Der vorbestimmte Drehzahlbereich um die Synchrondrehzahl herum zur Herabsetzung des maximalen Stromgrenzwertes ist durch eine minimal für den stationären Betrieb vorbestimmte Rotorstromfrequenz bzw. Drehzahldifferenz der Rotordrehzahl von der Synchrondrehzahl $n_{syn}$ bestimmt, die im Bereich von +/- 10 bis 15 Prozent oder sogar bis +/- 5 der Synchrondrehzahl liegen kann. Dieser vorbestimmte Drehzahlbereich kann mit dem Drehzahlbereich für den Betrieb der virtuellen Massenträgheit (VM-Betrieb) übereinstimmen, kann vorzugsweise auch nur ein engerer Teilbereich innerhalb des VM-Betriebsdrehzahlbereiches sein. Dies gilt analog für den vorbestimmten Rotorfrequenzbereich um die Nullfrequenz herum.

Es sollte erwähnt werden, dass die Rotordrehzahl und die Rotorfrequenz in fester Beziehung zueinander stehen. Die Differenz zwischen der Rotordrehzahl $n_r$ und der Synchrondrehzahl $n_{syn}$ im Verhältnis zu der Synchrondrehzahl kennzeichnet den sog. Schlupf s. Der Schlupf s kann dementsprechend als relatives Verhältnis oder eine prozentuale Angabe der Drehzahldifferenz zur Synchrondrehzahl verstanden werden. Der Schlupf s entspricht außerdem dem Verhältnis von der Rotorfrequenz $f_r$ zu der Statorfrequenz $f_s$ bzw. Netzfrequenz $f_N$. Ferner steht die Synchrondrehzahl der Maschine in einem festen Verhältnis zu der Stator- bzw. Netznennfrequenz $f_s$, $f_N$, die sich aus der Polpaarzahl p des Generators ergibt. Es gelten die folgenden Beziehungen:

$$s = (n_{syn} - n_r) / n_{syn} = f_r / f_s \qquad (1)$$

$$n_{syn} = f_s / p = f_N / p \qquad (2)$$

Die resultierende Rotorfrequenz $f_r$ ergibt sich aus der Statorfrequenz $f_s$ und der aktuellen Drehzahl $n_r$ unter Berücksichtigung der Polpaarzahl p. Im Synchronpunkt entspricht die Rotordrehzahl $n_r$ der Synchrondrehzahl $n_{syn}$, und der Schlupf s als auch die Rotorfrequenz $f_r$ werden zu null.

$$f_r = f_s - n_r \cdot p \qquad (3)$$

Aufgrund der obigen festen Beziehungen können die Rotordrehzahl $n_r$ und die Rotorfrequenz $f_r$ als äquivalente Größen angesehen werden, und sämtliche Ausführungen und Beziehungen, die hier in Bezug auf die Rotordrehzahl $n_r$ und die Änderungsrate $dn_r/dt$ der Rotordrehzahl gemacht bzw. angegeben werden, gelten analog auch in Bezug auf die Rotorfrequenz $f_r$ bzw. die Änderungsrate $df_r/dt$ der Rotorfrequenz, auch wenn dies nicht explizit hier wiederholt wird.

Gemäß der Erfindung kann der maximale Rotorstromgrenzwert wenigstens in einem Teilbereich des vorbestimmten Drehzahlbereichs bzw. Frequenzbereiches für einen kleineren Betrag der Abweichung der aktuellen Drehzahl des Rotors von der Synchrondrehzahl bzw. ein kleineres Verhältnis der Rotor- zu Statorfrequenz kleiner sein als für einen größeren Betrag dieser Abweichung bzw. des Verhältnisses. Dies sowohl im übersynchronen als auch im untersynchronen Drehzahlbereich. Bei der Synchrondrehzahl (Rotornullfrequenz) ist der maximale Rotorstromgrenzwert vorzugsweise am kleinsten.

Zusätzlich kann der maximale Rotorstromgrenzwert wenigstens in einem Teilbereich des vorbestimmten Drehzahlbereiches um die Synchrondrehzahl des Rotors herum bzw. des vorbestimmten Frequenzbereiches für einen kleineren Betrag der Drehzahländerungsrate $(dn_r/dt)$ bzw. der Frequenzänderungsrate $(df_r/dt)$ des Rotors kleiner sein als für einen größeren Betrag der Drehzahländerungsrate bzw. der Frequenzänderungsrate $(df_r/dt)$ des Rotors. In anderen Worten ist der maximale Rotorstromgrenzwert kleiner, wenn sich die Drehzahl (Rotorfrequenz) mit geringerer Geschwindigkeit dem Synchronpunkt (der Nullfrequenz) nähert und diesen langsamer durchläuft als wenn sie den Synchronpunkt (die Nullfrequenz) schneller durchläuft. Dies trägt dem Rechnung, dass im ersteren Fall die integrierte Verlustleistung und damit die thermische Belastung der Halbleiter durch die Umrichterbauteile mit größeren thermischen Zeitkonstanten (bspw. Kühlkörper) größer ist.

In Ausführungsformen eines beliebigen vorstehend erwähnten Verfahrens kann der maximale Rotorstromgrenzwert in mehreren Teilbereichen des vorbestimmten Drehzahlbereiches bzw. Frequenzbereiches oberhalb, unterhalb und in der Umgebung der Synchrondrehzahl bzw. Nullfrequenz des Rotors jeweils einen festen, konstanten Wert aufweisen, der jeweils kleiner als derjenige für den Normalbetrieb ist. Die Grenzwertkurve für den maximalen Rotorstromgrenzwert ist dann eine Treppenfunktion mit in jeweiligen Teilbereichen konstanten Rotorstromgrenzwerten und Sprüngen der Rotorstromgrenzwerte zwischen den Teilbereichen. Der maximale Rotorstromgrenzwert nimmt zur Synchrondrehzahl bzw. Nullfrequenz hin abhängig von der Drehzahl und deren Änderungsrate ab. Ein derartiges Verfahren kann äußerst einfach implementiert werden.

Alternativ kann der maximale Rotorstromgrenzwert entsprechend einer mathematischen Funktion der Drehzahl und der Drehzahländerungsrate bzw. der Frequenz und Frequenzänderungsrate des Rotors kontinuierlich zu der Synchrondrehzahl des Rotors hin reduziert werden. Die mathematische Funktion kann vorzugsweise, jedoch nicht notwendigerweise eine lineare Funktion sein, die zu der Synchrondrehzahl (der Nullfrequenz) hin monoton abnimmt. Dies unabhängig von der Annäherungsrichtung, also unabhängig davon, ob die Drehzahl vom übersynchronen zum untersynchronen Bereich oder umgekehrt vom untersynchronen zum übersynchronen Bereich bei der Drehzahlerholung wechselt. In der Umgebung oder bei der Synchrondrehzahl (Nullfrequenz) ist der maximale Rotorstromgrenzwert der Funktion entsprechend am kleinsten und umso kleiner, je kleiner die Drehzahländerungsrate (Frequenzänderungsrate) ist.

Es kann vorteilhafterweise eine Grenzwertkurve definiert werden, auf der der maximale Rotorstromgrenzwert liegt, wobei die Grenzwertkurve für eine negative Drehzahländerungsrate (Frequenzänderungsrate) in dem VM-Betriebsmodus oberhalb der entsprechenden Grenzwertkurve für eine positive Drehzahländerungsrate (Frequenzänderungsrate) liegt, die einem Betriebsmodus der Drehzahlerholung entspricht. Vorteilhafterweise wird also auch die Grenze des maximalen Rotorstroms für den Betrieb während der Drehzahlerholung ebenfalls in Abhängigkeit von der Drehzahländerungsgeschwindigkeit (Frequenzänderungsgeschwindigkeit) reduziert bzw. nachgeführt. Für den Fall, dass die Drehzahlerholung in einem Bereich knapp unter- oder oberhalb des Synchronpunktes erfolgt, kann die Stromgrenze deutlich unterhalb der für den Normalbetrieb üblichen Rotorstromgrenze liegen. Dies ermöglicht es, die thermische Marge für den Betrieb der Frequenzstützung mittels VM zu nutzen und die Drehzahlerholung mit verringerter Leistungsfähigkeit und einer gegebenenfalls veränderten Anlagencharakteristik zu betreiben.

Der maximale Rotorstromgrenzwert kann bei Einleitung des Betriebsmodus der virtuellen Massenträgheit um wenigstens 5%, vorzugsweise wenigstens 10%, gegenüber dem maximalen Rotorstromgrenzwert für den normalen Betriebsmodus erhöht werden. Der maximale Rotorstromgrenzwert kann ferner bei einem Wechsel des Betriebsmodus von der virtuellen Trägheitsmasse mit abnehmender Drehzahl des Rotors zu der Drehzahlerholung mit steigender Drehzahl des Rotors um wenigstens 5%, vorzugsweise wenigstens 10%, reduziert werden.

In einer Weiterbildung eines beliebigen vorstehend erwähnten Verfahrens kann der maximale Rotorstromgrenzwert ferner in Abhängigkeit von wenigstens einer an dem Umrichter gemessenen Betriebstemperatur bestimmt werden. Es können mehrere, an unterschiedlichen Stellen an bzw. in dem Umrichter gemessene Temperaturmesswerte erfasst und zur Bestimmung des maximalen Rotorstromgrenzwertes herangezogen werden. Somit können tatsächliche erfasste Temperaturverhältnisse und thermische Margen bei der Bestimmung bzw. Reduktion des maximalen Rotorstromgrenzwertes mit berücksichtigt werden. Z.B. kann/können die Bauteiltemperatur an den Halbleiterbauteilen und/oder die Kühlkörpertemperatur und/oder die Vorlauftemperatur eines Kühlfluids und/oder andere Temperaturen an geeigneten Stellen des Umrichters gemessen werden. Die Funktion des Rotorstromgrenzwertes kann entsprechend der bzw. den Temperaturen nachgeführt werden. Dies kann durch thermische Berechnung oder anhand einer Nachschlagetabelle erfolgen, die den maximalen Rotorstromgrenzwert mit Temperaturen bestimmter Erfassungsstellen in Beziehung setzt. Dadurch können die Rotorströme und Leistungsbereitstellungen des Umrichters besser an die momentanen thermischen Lasten und Umgebungsbedingungen (bspw. Außentemperaturen) angepasst werden.

In einer noch weiteren Ausführungsform kann alternativ oder zusätzlich der maximale Rotorstromgrenzwert ferner in Abhängigkeit von einer Schaltfrequenz von Leistungshalbleiterschaltelementen des Umrichters, insbesondere eines rotorseitigen Stromrichters, bestimmt werden. Je höher die Schaltfrequenz, desto höher sind auch die Schaltverluste und thermische Belastungen von Leistungshalbleiterschaltern. Vorteilhafterweise kann dann der maximale Rotorstromgrenzwert bei verringerter Schaltfrequenz heraufgesetzt werden und umgekehrt. Dabei kann zur weiteren Begrenzung der thermischen Belastung die Schaltfrequenz für die Leistungshalbleiterschalter des rotorseitigen Stromrichters in dem vorbestimmten Drehzahlbereich (Frequenzbereich) des Rotors in Abhängigkeit von der Drehzahl und der Drehzahländerungsrate (Frequenz und Frequenzänderungsrate) des Rotors reduziert werden. Vorzugsweise ist die Schaltfrequenz umso kleiner, je kleiner die Abweichung der Drehzahl von der Synchrondrehzahl (Frequenz von der Nullfrequenz) des Rotors ist und je kleiner die Drehzahländerungsrate (Frequenzänderungsrate) des Rotors ist. Die Schaltfrequenz kann bspw. als Funktion, z.B. eine polynomiale Funktion, der Drehzahl (Frequenz) und der Drehzahländerungsrate (Frequenzänderungsrate) des Rotors reduziert werden.

In einer besonders bevorzugten Ausführungsform des Verfahrens kann eine interne Steuereinrichtung zur Steuerung des Betriebs des Umrichters zur "Selbstdiagnose" eingerichtet sein, indem sie eine Unterschreitung eines Schwellenwertes der Netzfrequenz unterhalb der Netznennfrequenz für eine vorgegebene Schwellenwertzeitdauer selbstständig als das Erfordernis einer Netzfrequenzstützung durch die Betriebsart der virtuellen Massenträgheit erkennt. Die Steuereinrichtung kann daraufhin den Betriebsmodus der virtuellen Massenträgheit selbstständig aktivieren. Der Schwellenwert der Netzfrequenz und/oder die Schwellenwertzeitdauer kann/können durch ein übergeordnetes Steuersystem des Kraftwerks oder durch die interne Steuereinrichtung direkt vorgegeben werden.

Zusätzlich oder alternativ kann eine Betriebsart der Drehzahlerholung nach Beendigung des Betriebsmodus der virtuellen Massenträgheit anhand einer Änderung des Vorzeichens der Drehzahländerungsrate (Frequenzänderungsrate), nämlich eines Wechsels von einer negativen zu einer positiven Drehzahländerungsrate (Frequenzänderungsrate), des Rotors erkannt werden. Daraufhin kann der maximale Rotorstromgrenzwert auf einer Grenzwertkurve für die Drehzahlerholung festgelegt werden. Dies kann wiederum von der internen Steuereinrichtung für den Umrichter bewerkstelligt werden. Dieses Vorgehen ermöglicht es, unabhängig von der Steuerung des Kraftwerks zu erkennen, ob der VM-Betrieb beendet ist, z.B. für den Fall, dass hierzu keine weiteren Signale zu der Umrichtersteuerung übermittelt werden können.

Das Verfahren gemäß der Erfindung ist insbesondere für DGASM-basierte Kraftwerke mit einem Frequenzumrichter in Form eines Spannungszwischenkreisumrichters (sog. Voltage Source Converter, VSC) geeignet. Der Umrichter weist vorzugsweise einen rotorseitigen Stromrichter, der mit dem Rotor der Asynchronmaschine verbunden ist, und einen netzseitigen Stromrichter auf, der einerseits mit dem Netz und andererseits über einen Gleichspannungszwischenkreis mit dem rotorseitigen Stromrichter verbunden ist. Dies ermöglicht es, die Blindleistungsbereitstellung geeignet auf die beiden Stromrichter aufzuteilen, wobei der Wirkleistungsfluss im Rotorkreis durch beide gleichermaßen abgedeckt werden muss. Es können Zweipunkt- oder Mehrpunkt-Stromrichter oder modulare Mehrpunktstromrichter eingesetzt werden, die ansteuerbare elektronische Leistungshalbleiterbauelemente, wie etwa MOSFETs, IGBTs oder dgl. und Dioden, aufweisen.

In Verbindung mit einem Spannungszwischenkreisumrichter kann jedes beliebige vorstehend erwähnte Verfahren ferner aufweisen, dass die von dem rotorseitigen Stromrichter bereitzustellende Wirkleistung in Abhängigkeit von einer Wirkleistungsanforderung, also einer von dem elektrischen Netz angeforderten Wirkleistungsmenge, bestimmt wird, so dass der resultierende Rotorstromsollwert den maximalen Rotorstromgrenzwert nicht überschreitet. Gegebenenfalls wird die von dem rotorseitigen Stromrichter eingespeiste Wirkleistung begrenzt, um den maximalen Rotorstromgrenzwert nicht zu überschreiten.

Zusätzlich kann die von dem rotorseitigen Stromrichter bereitzustellende Blindleistung in Abhängigkeit von einer Blindleistungsanforderung, also vom Netz benötigten Blindleistungsmenge, und der aktuell bereitgestellten Wirkleistung derart bestimmt werden, dass der resultierende Rotorstromsollwert den maximalen Rotorstromgrenzwert nicht überschreitet. Gegebenenfalls wird die von dem rotorseitigen Stromrichter eingespeiste bzw. aufgenommene Blindleistung begrenzt, damit der maximale Rotorstromgrenzwert nicht überschritten wird.

In bevorzugten Ausführungsformen eines beliebigen vorstehend erwähnten Verfahrens kann für den Fall, dass der aktuelle Rotorstromsollwert auf den maximalen Stromgrenzwert begrenzt wird und die aktuell von dem rotorseitigen Stromrichter bereitstellbare Wirkleistung kleiner ist als die aktuelle Wirkleistungsanforderung, die von dem rotorseitigen Stromrichter bereitgestellte Blindleistung auf null reduziert. Der rotorseitige Stromrichter führt dann bspw. nur Wirkleistung.

In weiteren Ausführungsformen können der rotorseitige Stromrichter und der netzseitige Stromrichter beide betrieben werden, um ausschließlich Wirkleistung bereitzustellen. Blindleistung wird bei dieser Ausführungsform nicht bereitgestellt.

In einer Weiterbildung eines beliebigen vorstehend erwähnten Verfahrens wird ein aktueller maximaler Netzstromgrenzwert für den netzseitigen Stromrichter in dem vorbestimmten Drehzahlbereich um die Synchrondrehzahl (Frequenzbereich um die Nullfrequenz) des Rotors in Abhängigkeit von den ermittelten aktuellen Werten der Drehzahl (Frequenz) und der Drehzahländerungsrate (Frequenzänderungsrate) des Rotors und der Leistungsanforderung erhöht. Dadurch kann die Wirkung der Reduktion des Rotorstromgrenzwertes wenigstens teilweise in Bezug auf die Blindleistungserzeugung kompensiert werden. D.h. die reduzierte Blindleistungserzeugung auf der Rotorseite kann durch den netzseitigen Stromrichter bereitgestellt werden. Die Erhöhung des maximalen Netzstromgrenzwertes kann auch unter Berücksichtigung des aktuellen maximalen Rotorstromgrenzwertes und/oder der Leistungsbereitstellung durch den rotorseitigen Stromrichter erfolgen. Es können auch eine oder mehrere gemessene Temperaturen an dem Umrichter, wie etwa die Bauteiltemperatur, Vorlauftemperatur eines Kühlfluids, die Kühlkörpertemperatur oder dgl., zur Stellung bzw. Nachführung des aktuellen maximalen Netzstromgrenzwertes herangezogen werden. Dies kann durch thermische Berechnung oder anhand einer Nachschlagetabelle erfolgen.

Die Erhöhung des aktuellen maximalen Netzstromgrenzwertes ermöglicht es, die von dem netzseitigen Stromrichter bereitzustellende Blindleistung zu erhöhen, um eine unzureichende Blindleistungsbereitstellung des rotorseitigen Stromrichters wenigstens teilweise zu kompensieren, sofern der resultierende Netzstromsollwert den maximalen Netzstromgrenzwert nicht überschreitet. Vorteilhafterweise kann die Blindleistungsbereitstellung durch den netzseitigen Stromrichter entsprechend der Herabsetzung der Blindleistungsbereitstellung durch den rotorseitigen Stromrichter erhöht werden. Durch die Aufteilung der Blindleistungsbereitstellung innerhalb des Umrichters kann der Einsatz des Umrichters bei Überlast im Bereich des Synchronpunktes hinsichtlich der erforderlichen Wirk- und Blindleistungsbereitstellung optimiert werden, ohne dass die thermischen Grenzen und maximalen Sperrschichttemperaturen von Leistungshalbleiterbauelementen des Umrichters überschritten werden.

Gemäß einem weiteren Aspekt der Erfindung ist eine Umrichtervorrichtung für eine doppelt gespeiste Asynchronmaschine (DGASM) eines Kraftwerks geschaffen, deren Stator mit einem elektrischen Netz direkt verbunden ist und deren Rotor über den Umrichter mit dem elektrischen Netz verbunden ist. Die Umrichtervorrichtung weist einen rotorseitigen Stromrichter auf, der eingerichtet ist, um mit dem Rotor der Asynchronmaschine verbunden zu werden. Die Umrichtervorrichtung weist ferner einen netzseitigen Stromrichter auf, der eingerichtet ist, um mit dem Netz verbunden zu werden. Der netzseitige Stromrichter ist über einen Gleichspannungszwischenkreis mit dem rotorseitigen Stromrichter verbunden. Die Umrichtervorrichtung weist ferner eine Steuereinrichtung zur Steuerung eines Betriebs des Umrichters auf, wobei die Steuereinrichtung Mittel zur Kommunikation mit einem übergeordneten Steuersystem des Kraftwerks aufweist und eingerichtet ist, um ein Verfahren zum Betreiben des Kraftwerks gemäß einer beliebigen vorstehend beschriebenen Ausführungsform auszuführen.

Vorteilhafterweise kann das erfindungsgemäße Verfahren ausschließlich in der internen Steuereinrichtung der Umrichtervorrichtung implementiert sein. Es ist keine Anpassung an dem übergeordneten System oder der Anlagencharakteristik des Kraftwerks erforderlich. Das Verfahren kann vollständig auf der Ebene der Umrichtervorrichtung unter direkter oder indirekter (durch die Anlage vorgegebener) Kenntnis der Anlagencharakteristik und an dem System messbarer Größen implementiert werden. Dies bietet den Vorteil, dass nur die Umrichtervorrichtung entsprechend parametrisiert und angepasst werden muss, während die Steuerung und Regelung des Kraftwerks unbeeinflusst bleibt.

Gemäß einem noch weiteren Aspekt der Erfindung ist ein Kraftwerk mit einer doppelt gespeisten Asynchronmaschine geschaffen, deren Stator mit einem elektrischen Netz verbunden ist und deren Rotor über eine erfindungsgemäße Umrichtervorrichtung der vorstehend beschriebenen Art mit dem elektrischen Netz verbunden ist. Das Kraftwerk weist ferner ein Steuersystem zur Steuerung eines Betriebs des Kraftwerks auf, wobei das Steuersystem in Abhängigkeit von Netzparametern und Kraftwerksparametern Anforderungswerte P*, Q* für durch das Kraftwerk bereitzustellende Leistung vorgibt. Die Steuereinrichtung der Umrichtervorrichtung bestimmt daraus die Sollwerte für die bereitzustellende Statorleistung $P_s$, $Q_s$ und die durch die Umrichtervorrichtung bereitzustellende Leistung $P_r$, $(P_n)$, $Q_r$, $Q_n$ und steuert dann den netzseitigen und den rotorseitigen Stromrichter sowohl im normalen Betriebsmodus als auch im Betriebsmodus der virtuellen Massenträgheit gemäß dem erfindungsgemäßen Verfahren nach einer beliebigen der vorstehend beschriebenen Ausführungsformen in Abhängigkeit von den bereitzustellenden Leistungssollwerten an.

Die übergeordnete Systemsteuerung stellt somit lediglich die Netzparameter und Sollvorgaben bezüglich der durch das Kraftwerk bereitzustellenden Wirk- und Blindleistung bereit, während die interne Steuereinrichtung der Umrichtervorrichtung für die Realisierung des Betriebsverfahrens unabhängig von dem übergeordneten Steuersystem sorgt, so dass die Leistungsanforderungen erfüllt werden, also P* = $P_s$ + $P_r$ ($P_r$=$P_n$) und Q* = $Q_s$ + $Q_r$ + $Q_n$. (Hierin kennzeichnen P Wirkleistung und Q Blindleistung, während die Indizes s, r und n den Stator, den rotorseitigen Stromrichter bzw. den netzseitigen Stromrichter der Umrichtervorrichtung kennzeichnen.) Es ist aber prinzipiell auch möglich, dass das übergeordnete Steuersystem des Kraftwerks direkt Einfluss auf die Steuerung der Umrichtervorrichtung nimmt.

Das Kraftwerk kann ein beliebiges regeneratives DGASMbasiertes Kraftwerk sein, das über Umrichter an das Netz geschaltet ist. Vorzugsweise ist es eine drehzahlvariable Windkraftanlage, kann aber auch ein Wasserkraftwerk, Pumpspeicherkraftwerk, sein. Derartige Kraftwerke verfügen im Wesentlichen über keine mechanische Trägheits- bzw. Schwungmasse zur Energiezwischenspeicherung, können aber mit dem erfindungsgemäßen Verfahren bei Betriebsarten mit geringen Drehzahlen und/oder Drehzahlabsenkungen wirksam zur Stützung der Frequenzstabilität und zur Spannungshaltung in einem elektrischen Netz unter Vermeidung thermischer Überbelastung der verwendeten Systemkomponenten und bei Optimierung der Wirk- und Blindleistungsbereitstellung eingesetzt werden.

Im Übrigen gelten die vorstehenden Ausführungen in Verbindung mit den Ausführungsformen des erfindungsgemäßen Verfahrens und deren Vorteile in gleicher Weise auch für die Umrichtervorrichtung und das Kraftwerk gemäß der Erfindung.

Weitere vorteilhafte Einzelheiten von Ausführungsformen der Erfindung ergeben sich aus Unteransprüchen, der Zeichnung sowie der zugehörigen Beschreibung. Die Erfindung ist nachstehend anhand einer Zeichnung näher beschrieben, die beispielhafte, keinesfalls beschränkende Ausführungsformen der Erfindung zeigt, wobei gleiche Bezugszeichen in allen Figuren verwendet werden, um gleiche Elemente zu bezeichnen. Es zeigen:

Figur 1 eine beispielhafte Windkraftanlage mit einer doppelt gespeisten Asynchronmaschine (DGASM) gemäß einer Ausführungsform der Erfindung, in Form eines stark vereinfachten Blockdiagramms;

Figuren 2a, 2b grafische Darstellungen, die eine beispielhafte Anlagencharakteristik und beispielhafte Trajektorien für den Betrieb der virtuellen Massenträgheit und beispielhaft berechnete Sperrschichttemperaturen veranschaulichen;

Figur 3 ein Flussdiagramm eines Verfahrens zum Betreiben eines Kraftwerks mit einer DGASM, bspw. der Windkraftanlage nach Fig. 1, gemäß einer Ausführungsform der Erfindung, in stark vereinfachter Darstellung;

Figuren 4a, 4b eine beispielhafte Anlagencharakteristik und beispielhafte Trajektorien sowie beispielhaft berechnete Sperrschichttemperaturen für einen Betrieb der virtuellen Massenträgheit unter Verwendung eines erfindungsgemäßen Verfahrens;

Figur 5 eine beispielhafte Grenzwertkurve für den maximalen Rotorstromgrenzwert $I_{r,max(VM)}$ als Funktion der Rotordrehzahl und der Drehzahländerungsrate des Rotors, in vereinfachter Darstellung;

Figur 6 eine grafische Darstellung des maximalen Rotorstroms $I_{r,MAX(VM)}$ über der Rotordrehzahl $n_r$ unter Veranschaulichung der Abhängigkeit von der Drehzahländerungsrate und der Betriebstemperatur;

Figur 7 eine weitere Ausführungsform eines erfindungsgemäßen Verfahrens für einen Betrieb im virtuellen Massenträgheitsmodus unter Bereitstellung einer Blindleistung durch den rotorseitigen Stromrichter, in vereinfachter Darstellung;

Figur 8 eine weitere Ausführungsform eines erfindungsgemäßen Verfahrens für einen Betrieb im virtuellen Massenträgheitsmodus unter Bereitstellung von Wirk- und Blindleistung durch den netzseitigen Stromrichter;

Figur 9 eine grafische Darstellung des maximalen Netzstroms $I_{n,max}$ über der Rotordrehzahl $n_r$ unter Veranschaulichung einer Erhöhung des Netzstroms in Abhängigkeit von dem Rotorstrom, der Temperatur und der Sollleistungsanforderung, in vereinfachter Darstellung;

Figur 10 eine weitere Ausführungsform eines erfindungsgemäßen Verfahrens für einen Betrieb im virtuellen Massenträgheitsmodus unter Bereitstellung von Wirk- und Blindleistung sowohl durch den rotorseitigen als auch durch den netzseitigen Stromrichter, in vereinfachter Darstellung; und

Figur 11 eine grafische Darstellung des maximalen Rotorstroms $I_{r,max}$ und der Schaltfrequenz $f_{sw,r}$ auf der Rotorseite über der Rotordrehzahl $n_r$ zur Veranschaulichung einer weiteren Modifikation eines erfindungsgemäßen Verfahrens, in stark vereinfachter Darstellung.

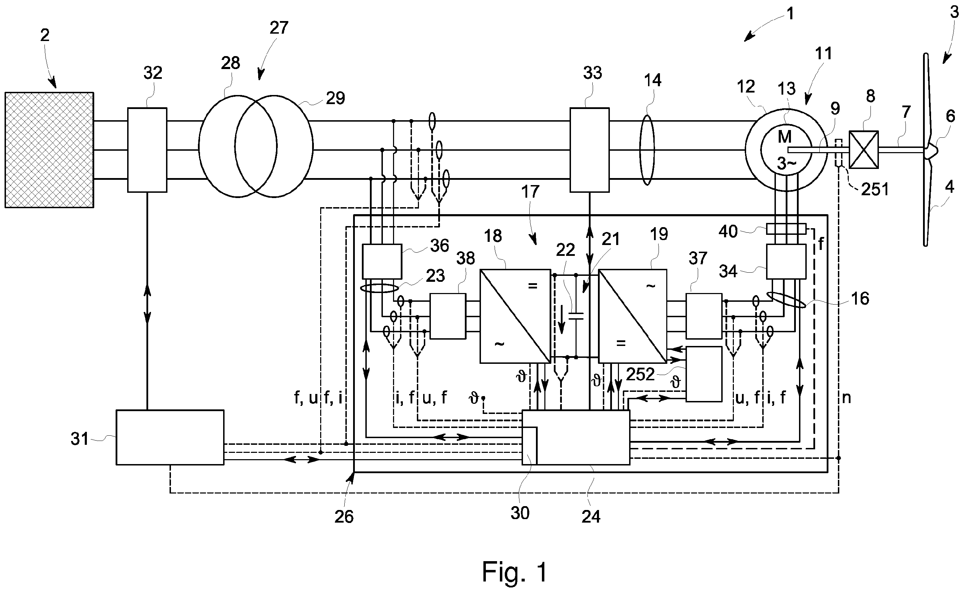

Fig. 1 zeigt in stark vereinfachter Blockdiagrammdarstellung eine Windkraftanlage 1 zur Energieerzeugung und -Übertragung zu einem elektrischen Netz 2 gemäß einer beispielhaften Ausführungsform der vorliegenden Erfindung. Die Windkraftanlage 1 stellt nur ein Beispiel für ein Kraftwerk dar, das auf einer doppelt gespeisten Asynchronmaschine (DGASM) basiert, mit variabler Rotordrehzahl betrieben werden kann und in der Lage ist, variable Ausgangsfrequenzen des Kraftwerkgenerators zur Energieübertragung an die Netzfrequenz anzupassen.

In dem beispielhaften Kraftwerkssystem 1 ist eine Rotationseinheit 3 dargestellt, die bei der Anwendung für eine Windkraftanlage eine Windturbine sein kann, die mehrere Rotorblätter 4 aufweist. Die Rotorblätter 4 sind mit einer rotierenden Nabe 6 gekoppelt und laufen gemeinsam mit dieser an einer Welle 7 um, wenn sie durch Windkraft drehend angetrieben werden. Die Welle 7 ist mit einem optionalen Getriebe 8 gekoppelt, dessen Ausgangswelle 9 mit einem Generator 11 verbunden ist. Gemäß der Erfindung ist der Generator 11 eine doppelt gespeiste Asynchronmaschine (DGASM) 11, die einen Stator 12 und einen Rotor 13 aufweist.

Der Stator 12 der DGASM 11 ist über einen Statorbus bzw. -kreis 14 mit dem elektrischen Netz 2 verbunden, während der Rotor 13 über einen Rotorbus bzw. -kreis 16 mit einem Umrichter 17 und über diesen weiter mit dem Netz 2 verbunden ist. Der Statorkreis 14 liefert eine zwei- oder mehrphasige, vorzugsweise dreiphasige Ausgangsleistung von dem Stator 12 der DGASM 11, und der Rotorkreis 16 stellt eine zwei oder mehrphasige, vorzugsweise dreiphasige Leistung des Rotors 13 der DGASM 11 bereit.

Der Umrichter 17 weist einen rotorseitigen Stromrichter 18 und einen netzseitigen Stromrichter 19 auf, die über einen Gleichspannungszwischenkreis 21 miteinander verbunden sind, an dem ein Gleichspannungszwischenkreiskondensator 22 zur Energiezwischenspeicherung angeordnet ist. Der rotorseitige Stromrichter 18 ist über den Rotorkreis 16 mit dem Rotor 13 der DGASM 11 gekoppelt. Der netzseitige Stromrichter 19 ist wiederum über einen netzseitigen Bus bzw. Kreis 23 mit dem elektrischen Netz 2 verbunden.

In bevorzugten beispielhaften Konfigurationen sind der rotorseitige Stromrichter 18 und der netzseitige Stromrichter 19 für einen normalen Betriebsmodus in einer vorzugsweise dreiphasigen, durch Pulsweitenmodulation (PWM) gesteuerten Anordnung unter Verwendung von Leistungshalbleiterschaltern, insbesondere Bipolartransistoren mit isolierter Gate-Elektrode (IGBTs) als Schaltvorrichtungen eingerichtet. Es können andere geeignete Leistungshalbleiterschaltelemente, wie z.B. IGCTs (Insulated Gate-Commutated Thyristors), MOSFETs, Bipolartransistoren oder andere geeignete Schaltvorrichtungen verwendet werden. Im Allgemeinen sind auch Freilaufdioden zu den Leistungshalbleiterschaltern gegensinnig parallel geschaltet, um Strom in beide Richtungen durch den Schalter führen zu können.

Der Umrichter 17 ist mit einer Steuereinrichtung 24 gekoppelt, die zur Steuerung des Betriebs des rotorseitigen Stromrichters 18 und des netzseitigen Stromrichters 19 dient. Zum Beispiel kann die Steuereinrichtung 24 Steuerbefehle zu den Stromrichtern 18, 19 senden, um die Modulation der Schaltelemente, bspw. IGBTs, die in dem Umrichter 17 verwendet werden, zu steuern, um eine gewünschte Wirk- und Blindleistungsausgabe zu erzielen. Die Steuereinrichtung 24 kann eine beliebige geeignete Steuerschaltung sein. Bspw. kann die Steuereinrichtung verschiedene Hardwarebauteile, wie Regler, Signalwandler und andere Vorrichtungen enthalten, die zur Verarbeitung von an der Steuereinrichtung 24 empfangenen Signalen verwendet werden. Die Steuereinrichtung 24 kann vorzugsweise eine Verarbeitungsvorrichtung, z.B. einen Prozessor, Mikroprozessor, Mikrocontroller oder dgl., enthalten, die Computer ausführbare Instruktionen speichert, die in einem Computer lesbaren Medium gespeichert sind. Wenn sie durch die Verarbeitungsvorrichtung ausgeführt werden, können diese Instruktionen die Verarbeitungsvorrichtung veranlassen, bestimmte Steuerungsoperationen, wie etwa die Regelung der Spannung der DGASM-basierten Windkraftanlage 1 zur Einspeisung in das elektrische Netz 2, durchzuführen.

Wie in Fig. 1 veranschaulicht, empfängt die Steuereinrichtung 24 eine Reihe von Messsignalen, die aktuelle Betriebsgrößen kennzeichnen und die die Steuereinrichtung 24 zur Steuerung des Betriebs des Umrichters 17 verwendet. Die Messsignale sind in Fig. 1 in gestrichelter Linie dargestellt, während die Steuersignalleitungen in durchgezogener Linie veranschaulicht sind. Wie aus Fig. 1 zu ersehen, gehören zu den Messsignalen die gemessenen Spannungen u und Ströme i in dem Rotorkreis 16 sowie in dem netzseitigen Kreis 23. Ferner können auch die Spannungen u und Ströme i des Statorkreises 14 erfasst und der Steuereinrichtung 24 zugeführt werden. Zudem wird über die gemessenen Spannungen u im Statorkreis und/oder im Netzkreis 23 die Netzfrequenz des Netzes 2 gemessen bzw. bestimmt. Außerdem wird die Drehzahl $n_r$ der Getriebeausgangswelle 9, die zugleich die Rotorwelle des Rotors 13 bildet, mittels eines Drehzahlsensors 251 erfasst. Darüber hinaus können auch Temperaturen an oder in dem Umrichter 17 mittels einer Temperaturmessvorrichtung 252 gemessen werden. Wie durch die mit ϑ bezeichneten Messleitungen in Fig. 1 angezeigt, können Temperaturen an unterschiedlichen Stellen, bspw. direkt an den Leistungshalbleiterschaltelementen, insbesondere IGBTs, deren Gate-Treibern, den Kühlkörpern der Schaltergruppen, der Schranktemperatur oder auch im Vorlauf eines Kühlfluids für die Schaltungen erfasst werden.

Der Umrichter 17 kann gemeinsam mit der Steuereinrichtung 24 und diversen Messeinrichtungen, insbesondere den Spannungs- und Strommessern in dem Rotorkreis 16 und dem Netzkreis 23 eine Umrichtervorrichtung 26 bilden, die vorzugsweise zu einer baulichen Einheit integriert bzw. zusammengebaut und vorparametrisiert werden kann, um als solche in verschiedenen Kraftwerkssystemen, wie z.B. der Windkraftanlage 1 nach Fig. 1, als Frequenzumrichter zur Regelung der Drehzahl, der Wirk- und Blindleistung, die in das Netz 2 eingespeist bzw. daraus entnommen werden sollen, zu dienen. Während der Stator 12 der DGASM 11 direkt mit dem Netz 2 verbunden ist und einen Großteil der Leistung liefert, muss nur ein Teil der Leistung über den Umrichter 17 an die gewünschte Frequenz und Leistung angepasst werden. Insofern können Umrichter 17 mit deutlich geringerer Leistung als der Anlagenleistung verwendet werden, die kostengünstiger und verlustärmer als bei vergleichbaren Synchrongeneratoren sind, woraus sich auch ein besserer Wirkungsgrad des Systems insgesamt ergibt.

Wie in Fig. 1 veranschaulicht, enthält das Kraftwerkssystem 1 hier einen Transformator 27, der die Windkraftanlage 1 mit dem elektrischen Netz 2 verbindet. In manchen Inselkraftwerken mit Systemspannungen von 400V bis etwa 6kV kann der Transformator 27 gegebenenfalls entfallen. Der Transformator 27 weist hier eine Primärwicklung 28, die an das Netz 2 angeschlossen ist und bspw. eine Mittelspannung im Bereich von einigen Kilovolt führen kann, und eine Sekundärwicklung 29 auf, an die sowohl der Statorkreis 14 als auch der netzseitige Kreis 23 angeschlossen sind, die eine Wechselspannung im Bereich von einigen hundert Volt bis Kilovolt führen können. Der Transformator 27 könnte auch mehrere Sekundärwicklungen aufweisen, die jeweils einzeln dem Statorkreis 14 bzw. der Netzseite 23 des Umrichters 17 zugeordnet sein könnten.

Das Kraftwerkssystem 1 weist ferner ein Steuersystem 31 auf, das ein in Bezug auf die Steuereinrichtung 24 der Umrichtervorrichtung 26 übergeordnetes Steuersystem bildet und zur Steuerung des Betriebs der gesamten Windkraftanlage 1 bestimmt ist. Das Steuersystem 31 und die Steuereinrichtung 24 der Umrichtervorrichtung 26 sind über Steuer- und Kommunikationsleitungen und -schnittstellen, z.B. eine Kommunikationsschnittstelle 30 der Steuereinrichtung 24, kommunikationsmäßig miteinander verbunden. Das Steuersystem 31 kann Leistungsanforderungen von einem hier nicht näher dargestellten Netzbetreiber empfangen (nicht veranschaulicht) oder die Leistungsanforderungen anhand von gemessenen Netzbetriebsgrößen, wie etwa Strömen, Spannungen und Frequenz auf der Primär- bzw. Netzseite des Transformators 27, bestimmen und die Leistungsanforderung an die Steuereinrichtung 24 übermitteln.

Das Steuersystem 31 kann ferner Betriebsgrößen innerhalb der Windkraftanlage 1, wie z.B. diverse Ströme i und Spannungen u, die Betriebsdrehzahl $n_r$ des Rotors 13 und andere, empfangen, verarbeiten und auswerten. Dementsprechend kann eine Messung der Frequenzen auf der Stator- und Rotorseite auf Basis der gemessenen Ströme und Spannungen erfolgen, wie in Figur 1 angezeigt. Die Bestimmung der Netzfrequenz kann auch über einen separaten Synchronisiertransformator oder eine zusätzliche Wicklung an dem Transformator 27 oder am Transformator 27 selbst erfolgen. Ferner kann auch ein Sensorelement 40 (vgl. Figur 1) zur Bestimmung der Rotorfrequenz bspw. zwischen einem Unterbrecher 34 auf der Rotorseite 16 des Umrichters 17 und dem Rotor 13 eingesetzt sein. Die Bestimmung der Rotorfrequenz in dem Sensor 40 kann ebenfalls über die elektrischen Größen von Strom und Spannung mittels Wandler/Übertrager und/oder Auswertelektronik oder indirekt über die Größen der elektrischen- und/oder magnetischen Felder unter Verwendung entsprechender Messelektronik erfolgen.

Gemäß einem bevorzugten Aspekt der Erfindung ist das Steuersystem 31 weder dazu bestimmt noch eingerichtet, den Umrichter 17 direkt anzusteuern. Hierzu ist allein die für die Umrichtervorrichtung 26 interne Steuereinrichtung 24 vorgesehen.

Es können verschiedene schaltbare Elemente, Sicherungen, Stromunterbrecher und andere Vorrichtungen, wie bspw. ein Netzleistungsschalter 32, ein Statorschütz 33 sowie weitere Leistungsschalter bzw. Unterbrecher 34 auf der Rotorseite 16 und 36 auf der Netzseite 23 des Umrichters 17 vorgesehen sein, um die jeweiligen Stromkreise zu schließen oder bedarfsweise, wenn z.B. ein Stromfluss zu hoch ist und Komponenten beschädigen könnte oder aus anderen Gründen, zu trennen. Es können weitere Schutzeinrichtungen in der Windkraftanlage 1 enthalten sein.

Außerdem enthält die Umrichtervorrichtung 26 sowohl auf der Rotorseite 16 als auch auf der Netzseite 23 des Umrichters 17 Filteranordnungen 37, 38 in Form von Induktivitäten oder LRC-Schaltungen, die zur Dämpfung unerwünschter Schwingungen und zur Entstörung und Filterung von hochfrequenten Spannungs- und Stromverzerrungen, die durch Schalten der Halbleiterschalter in dem Umrichter 17 hervorgerufen werden, dienen.

Im Betrieb wird die Windenergie durch die rotierenden Blätter 4 der Windturbine 3 aufgefangen und in kinetische Energie der in Drehung versetzten Wellen 7, 9 umgewandelt, die die DGASM 11 in elektrische Leistung umwandelt, die über einen doppelten Pfad zu dem elektrischen Netz 2 geliefert wird. Die zwei Leistungspfade sind durch den Statorkreis 14 und den Rotorkreis 16 definiert. Auf der Rotorkreisseite 16 wird sinusförmige mehrphasige (z.B. dreiphasige) Wechselstrom(AC)-Leistung dem Umrichter 17 zugeführt (übersynchroner Betrieb) oder abgegeben (untersynchroner Betrieb). Der rotorseitige Stromrichter 18 wandelt im übersynchronen Betrieb die AC-Leistung, die durch den Rotorkreis 16 bereitgestellt wird, in Gleichspannungs(DC)-Leistung um, die an dem Gleichspannungszwischenkreis 21 bereitgestellt wird. Ein Schalten der Leistungshalbleitervorrichtungen (z.B. IGBTs), die in parallelen Brückenschaltungen des rotorseitigen Stromrichters 18 verwendet werden, kann moduliert werden, um die AC-Leistung aus dem Rotorkreis 16 in geeignete DC-Leistung für den DC-Zwischenkreis 21 umzuwandeln.

Der netzseitige Stromrichter 19 wandelt im übersynchronen Betrieb die DC-Leistung auf dem DC-Zwischenkreis 21 in AC-Leistung mit einer Frequenz um, die sich für das elektrische Netz 180 eignet. Insbesondere kann das Schalten der Leistungshalbleitervorrichtungen (z.B. IGBTs), die in Brückenschaltungen des netzseitigen Stromrichters 19 verwendet werden, moduliert werden, um die DC-Leistung auf dem DC-Zwischenkreis 21 in geeignete AC-Leistung auf der Netzseite 23 umzuwandeln. Die Leistung von dem Umrichter 17 kann gemeinsam mit der über den Statorkreis 17 bereitgestellten Leistung über den Transformator 27 dem elektrischen Netz 2 zugeführt werden (übersynchroner Betrieb). Es kann auch umgekehrt Leistung aus dem Netz 2 entnommen und über den Statorkreis 14 sowie den Umrichter 17 und den Rotorkreis 16 in die DGASM 11 eingespeist werden, die prinzipiell auch motorisch betrieben werden kann. Die mit dem Netz 2 ausgetauschte Leistung kann Wirk- und/oder Blindleistung enthalten.

Im normalen Betrieb wird das Kraftwerksystem 1 entsprechend einer Anlagenkennlinie betrieben, um nominelle Leistung in das Netz 2 einzuspeisen. Das Kraftwerksystem 1 ist ferner dazu eingerichtet, im Falle von Schwankungen der Netzfrequenz, insbesondere bei einem plötzlichen Abfall der Netzfrequenz aufgrund eines plötzlichen Verlustes von Einspeiseleistung in einem Verbundnetz oder durch eine plötzliche Erhöhung der Last in dem Netz 2 für eine dynamische Stützung der Netzfrequenz zu sorgen. Hierzu weist das Kraftwerksystem 1 einen Betriebsmodus auf, der als der virtuelle Masseträgheitsmodus oder die Emulation virtueller Masseträgheit (kurz VM-Betriebsmodus) bezeichnet wird und an sich aus dem Stand der Technik bekannt ist. In dem virtuellen Masseträgheitsmodus wird die kinetische Energie der rotierenden Elemente einer Windkraftanlage zur erhöhten Leistungsabgabe verwendet, wobei die Anlagenkennlinie derart modifiziert betrieben wird, dass das Drehmoment und die Wirkleistungsabgabe über die nominelle Anlagenleistung hinaus erhöht werden, die Rotationsgeschwindigkeit langsam abnimmt und Rotationsenergie abgebaut wird.

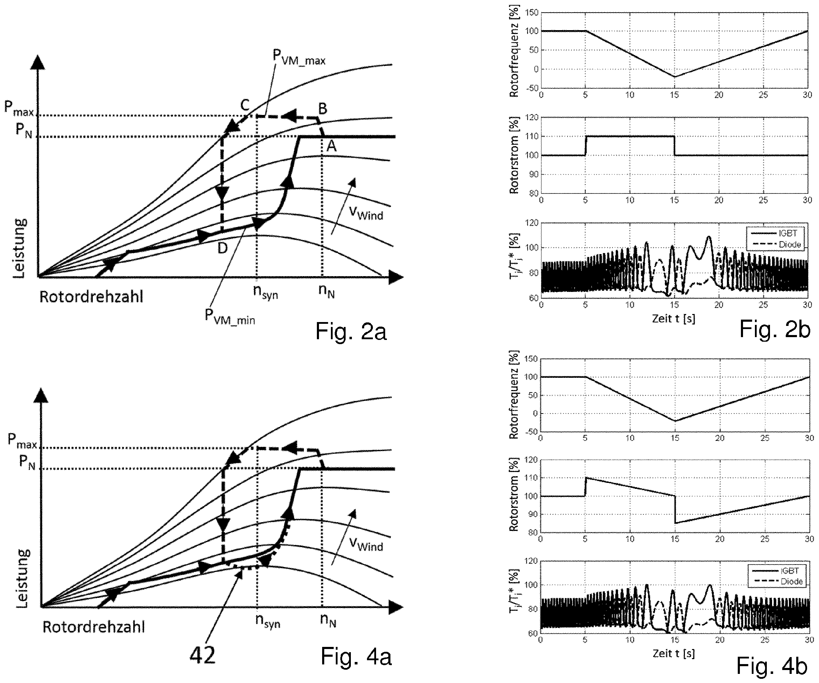

Fig. 2a zeigt eine beispielhafte Anlagencharakteristik, wobei auf der Abszisse die Rotordrehzahl der DGASM aufgetragen ist, während die Ordinate die Ausgangsleistung der Anlage zeigt. Zur Emulation der Masseträgheit wird die Anlagenkennlinie von Leistung zu Drehzahl so verändert, dass für einen weiten Drehzahlbereich die Anlagenleistung nahe der maximal möglichen Ausgangsleistung $P_{max}$ ist. Wie in Fig. 2a veranschaulicht, wird die DGASM bspw. in Abhängigkeit von einer jeweiligen Windgeschwindigkeit $v_{Wind}$ in dem Betriebspunkt A bei der Nennfrequenz $f_N$ mit der Nennleistung $P_N$ betrieben. Während eines plötzlichen Verlusts an Einspeiseleistung im elektrischen Netz (bspw. beim Kraftwerksausfall) nimmt die Netzfrequenz plötzlich ab. Die DGASM wird in den VM-Betriebsmodus, also zu einer VM-Steuerkennlinie umgeschaltet, so dass der Betriebspunkt A zu dem Punkt B wechselt, in dem eine erhöhte Bereitstellung und Abnahme der elektrischen Leistung erfolgt, die der maximalen Leistung $P_{max}$ der Anlage entspricht. Da diese erhöhte Leistungsabnahme die mechanische Leistung durch Bereitstellung von Windenergie der Anlage übersteigt, sinkt daraufhin die Drehzahl $n_r$ des Rotors 13, und die Rotationsenergie nimmt langsam ab. Für eine Rotordrehzahl oberhalb des Synchronpunktes $n_{syn}$ kann die abgegebene Leistung vorteilhafterweise oberhalb der Nennleistung und unterhalb oder gleich der maximalen Leistung der Anlage liegen, um die Netzfrequenz zu stützen. Die VM-Betriebsart kann je nach späterem Einsatzzeitpunkt der Primärregelung etwa 10 Sekunden oder mehr andauern.

Aufgrund der Drehzahlverriegelung der DGASM 11 in der VM-Betriebsart geht die Maschine verhältnismäßig langsam von einem übersynchronen in einen untersynchronen Betrieb über und durchläuft dabei bei hinreichend langem VM-Betrieb den Synchronpunkt bei $n_{syn}$. In Fig. 2a geht der Betriebspunkt vom Punkt B zum Punkt C über und bewegt sich dann weiter mit abnehmender Rotordrehzahl $n_r$ und abfallender Kennlinie für die maximale Leistung im VM-Betriebsmodus, $P_{VM\,max}$, bis zu dem Betriebspunkt D. In dem Betriebspunkt D setzt die Primärregelung anderer Erzeugereinheiten im Netz 2 ein, und es kann über sog. Drehzahlerholung der Normalbetrieb wieder aufgenommen werden. In der Anlagenkennlinie in Fig. 2a ist für die Zeit der Drehzahlerholung von dem Betriebspunkt D zu dem Betriebspunkt A zu sehen, dass die Drehzahl wieder zunimmt und auf der Drehzahlkennlinie $P_{VM\,max}$ wieder auf den Arbeitspunkt A mit höherer Rotordrehzahl zuläuft, wobei der Synchronpunkt nochmals durchfahren wird.

Während die DGASM 11 in dem VM-Betriebsmodus langsam von einem übersynchronen in einen untersynchronen Betrieb übergeht, durchläuft sie dabei den Synchronpunkt $n_{syn}$ ($f_r$=0 Hz). Das Durchlaufen dieses Synchronpunktes bedeutet eine erhöhte Belastung der Leistungshalbleiterbauelemente des rotorseitigen Stromrichters, da die sehr geringen Rotorfrequenzen im Bereich des Synchronpunktes von etwa 0 bis 3 Hz eine deutlich höhere Sperrschichttemperatur bei gleichem Ausgangsstrom zur Folge haben. Wie allgemein bekannt ist, ist die Winkelfrequenz von Rotorspannungen und -strömen in einer doppelt gespeisten Asynchronmaschine durch die Winkelfrequenz des Statorfeldes und die Rotordrehzahl bestimmt. Die Winkelfrequenz des Rotorstroms entspricht der mit dem Schlupf multiplizierten Winkelgeschwindigkeit des Statorstroms, wobei der Schlupf durch die Differenz zwischen der synchronen und der mechanischen Winkelgeschwindigkeit des Rotors bestimmt ist. Die Winkelfrequenz des Rotorstroms wird sehr klein, wenn der Schlupf nahezu null beträgt, d.h. die Rotordrehzahl $n_r$ sich der synchronen Drehzahl $n_{syn}$ nähert. Infolge der deutlich erhöhten thermischen Belastung der Leistungshalbleiterbauelemente und der höheren Sperrschichttemperaturen ist die maximale Leistungsabgabe der Windkraftanlage und des Umrichters im Bereich des Synchronpunktes im Vergleich zu einem Betrieb bei Nenndrehzahl im übersynchronen Betrieb stark begrenzt.

Auch bei der Drehzahlerholung wird der Synchronpunkt $n_{syn}$ mit $f_r$=0 Hz durchlaufen, wenn die Drehzahl vom untersynchronen Bereich zum übersynchronen Bereich wechselt. Somit wird auch bei der Drehzahlerholung die thermische Belastung der Halbleiterleistungsbauelemente wiederholt sehr hoch, insbesondere da diese in diesem Falle durch den vorherigen VM-Betrieb bereits vorbelastet sind und beim Einleiten der Drehzahlerholung deutlich höhere Sperrschichttemperaturen aufweisen. Die thermische Marge bei der Drehzahlerholung kann deutlich reduziert sein, so dass die Anlagenleistung hinsichtlich der Wirk- und Blindleistungsbereitstellung herabgesetzt sein kann, wie dies durch den $P_{VM\,min}$-Ast der Kennlinie in Fig. 2a angezeigt ist.

Fig. 2b zeigt die Rotorfrequenz und den Rotorstrom sowie beispielhaft berechnete Sperrschichttemperaturen, die auf den maximalen Auslegungsgrenzwert bezogen sind, für einen VM-Betrieb. Im Falle eines Betriebs an der Stromgrenze bei voller Wirk- und Blindleistung zeigt die Drehzahlabsenkung im Bereich zwischen 5 und 15 Sekunden eine Erhöhung des Rotorstroms von 10%, die im Sinne der erhöhten Wirkleistungsabgabe der DGASM die Netzfrequenz stützt und aufgrund der Anlagencharakteristik zu einer Drehzahlabsenkung führt. Im Bereich von 13 Sekunden wird der Synchronpunkt der Anlage durchfahren, wodurch sich deutlich höhere Sperrschichttemperaturen aufgrund der sehr tiefen Ausgangsfrequenzen im 0 Hz - Bereich ausbilden. Nachdem der eigentliche Betrieb der virtuellen Trägheit bei 15 Sekunden beendet ist, beginnt die Drehzahlerholung. In diesem Fall kehrt das System über die Anlagencharakteristik wieder zu dem Nennbetriebspunkt zur Nennleistungsbereitstellung zurück, sofern die entsprechenden Windgeschwindigkeiten vorliegen. Die Drehzahlerholung durchläuft erneut den Synchronpunkt vom untersynchronen zum übersynchronen Bereich, was maximal mit 100% des Rotorstroms erfolgt, da das System auf der Anlagencharakteristik für den Normalbetrieb betrieben wird. Aus der Darstellung der relativen Sperrschichttemperaturen, die auf einen möglichen Auslegungs- oder Grenzwert $T_j^*$ bezogen sind, wird deutlich, dass die Auslegungs- oder Grenzwerte im Bereich des Synchronpunktes für diese Betriebsart deutlich überschritten werden können.

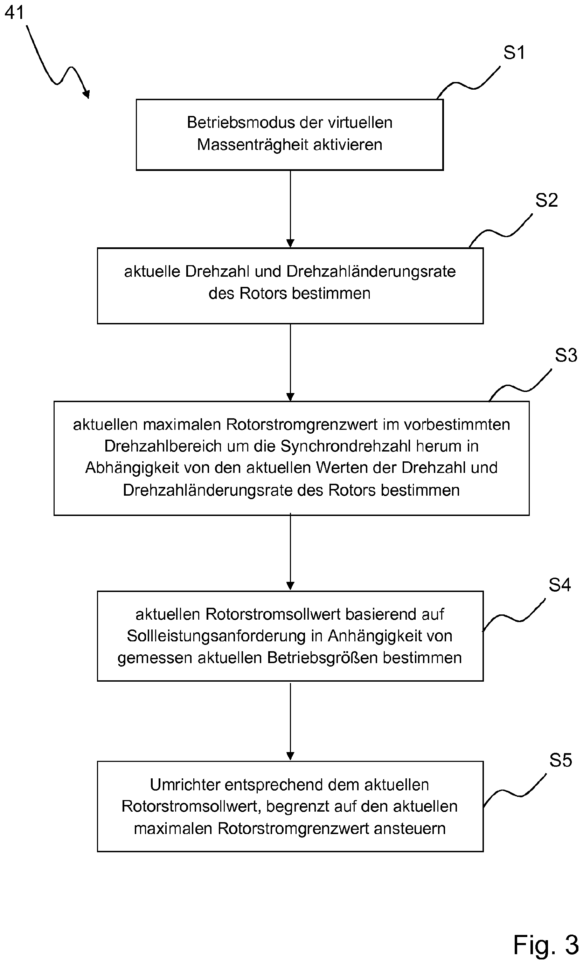

Um dem abzuhelfen, stellt die vorliegende Erfindung ein Verfahren zum Betreiben eines Kraftwerks, wie etwa der Windkraftanlage 1 nach Fig. 1, mit einer doppelt gespeisten Asynchronmaschine, bspw. der DGASM 11, bereit, die es ermöglicht, die Wirk- und Blindleistung innerhalb des Umrichters, bspw. des Umrichters 17, vorteilhaft aufzuteilen und auch den Rotorstrom geeignet zu begrenzen, um ein Überschreiten der maximalen Sperrschichttemperaturen der Leistungshalbleiterbauelemente des Umrichters zu vermeiden. Das erfindungsgemäße Verfahren soll in Verbindung mit Fig. 3 näher erläutert werden.

Fig. 3 zeigt ein Flussdiagramm eines erfindungsgemäßen Verfahrens zum Betreiben eines Kraftwerks mit einer doppelt gespeisten Asynchronmaschine (z.B. der Windkraftanlage 1 nach Fig. 1) in dem Betriebsmodus der virtuellen Massenträgheit (VM-Betriebsmodus). Im Schritt S1 wird der VM-Betriebsmodus von der Steuereinrichtung (z.B. 24) der Umrichtervorrichtung (z.B. 26) aktiviert. Dies kann auf Anforderung durch das übergeordnete Steuersystem (z.B. 31) erfolgen, oder indem die Steuereinrichtung 24 selbst durch "Selbstdiagnose" anhand der Leistungsanforderung und der momentanen Betriebsgrößen oder anhand der Erfassung einer Unternetzfrequenz unterhalb der Netznennfrequenz für eine bestimmte Schwellenwertzeitdauer feststellt, dass eine Frequenzstützung des Netzes (z.B. 2) erforderlich ist.

Im Schritt S2 werden die aktuelle Drehzahl $n_r$ und die Drehzahländerungsrate $dn_r/dt$ des Rotors (z.B. 13) bestimmt. Diese Größen können bspw. anhand der durch den Drehzahlsensor 251 erfassten Drehzahl $n_r$ der Rotorwelle 9 bestimmt werden.

Im Schritt S3 wird zuerst überprüft, ob die aktuelle mechanische Drehzahl $n_r$ des Rotors (z.B. 13) in einem vorbestimmten Drehzahlbereich [$n_{VM-}=n_{syn}-\Delta n$; $n_{VM+}=n_{syn}+\Delta n$] des Rotors herum liegt. $\Delta n$ kann mindestens 5 %, vorzugsweise etwa 10-15 % der Synchrondrehzahl $n_{syn}$ betragen. Falls dies der Fall ist, wird im Schritt S3 dann der aktuelle maximale Rotorstromgrenzwert $I_{r,max}$ in dem vorbestimmten Drehzahlbereich [$n_{VM-}$; $n_{VM+}$] in Abhängigkeit von den aktuellen Werten der Drehzahl $n_r$ und der Drehzahländerungsrate $dn_r/dt$ des Rotors festgesetzt. Dabei wird der maximale Rotorstromgrenzwert $I_{r,max}$ wenigstens in einem Teilbereich des vorbestimmten Drehzahlbereiches reduziert, wenn sich die Drehzahl $n_r$ des Rotors der Synchrondrehzahl $n_{syn}$ nähert. Im Allgemeinen wird der maximale Rotorstromgrenzwert $I_{r,max}$ umso mehr reduziert, je kleiner der Betrag der Abweichung der aktuellen Drehzahl $n_r$ des Rotors von der Synchrondrehzahl $n_{syn}$ ist. Außerdem wird der maximale Rotorstromgrenzwert $I_{r,max}$ auch in Abhängigkeit von der Drehzahländerungsrate $dn_r/dt$ reduziert. Vorzugsweise wird der maximale Rotorstromgrenzwert $I_{r,max}$ wenigstens in einem Teilbereich des vorbestimmten Drehzahlbereiches [$n_{VM-}$; $n_{VM+}$] umso mehr reduziert, je kleiner der Betrag der Drehzahländerungsrate $dn_r/dt$ des Rotors ist. Der maximale Rotorstromgrenzwert $I_{r,max}$ kann in dem vorbestimmten Bereich [$n_{VM-}$; $n_{VM+}$] um die Synchrondrehzahl $n_{syn}$ herum kontinuierlich oder stufenweise reduziert werden. Ebenso kann die Reduktion in Abhängigkeit von der Drehzahländerungsrate $dn_r/dt$ kontinuierlich oder stufenweise erfolgen.

Im Schritt S4 wird basierend auf der Sollleistungsanforderung und in Abhängigkeit von den aktuell gemessenen Betriebsgrößen der aktuelle Rotorstromsollwert, der von dem Rotor bereitgestellt werden soll, bestimmt. Zumindest wird der Sollwert für den Rotorwirkstrom in Abhängigkeit von der Wirkleistungsanforderung bestimmt.

Im Schritt S5 wird der Umrichter (z.B. 17) angesteuert, um pulsartig sinusförmige Spannungen und Ströme mit dem aktuellen Rotorstromsollwert oder, falls der aktuelle Rotorstromsollwert den aktuellen maximalen Rotorstromgrenzwert $I_{r,max}$ erreicht oder überschreitet, mit dem aktuellen maximalen Rotorstromgrenzwert $I_{r,max}$ an den Rotor zu schalten. In anderen Worten stellt der Umrichter einen Rotorstrom entsprechend dem aktuellen Rotorstromsollwert, begrenzt auf den aktuellen maximalen Rotorstromgrenzwert $I_{r,max}$ bereit.

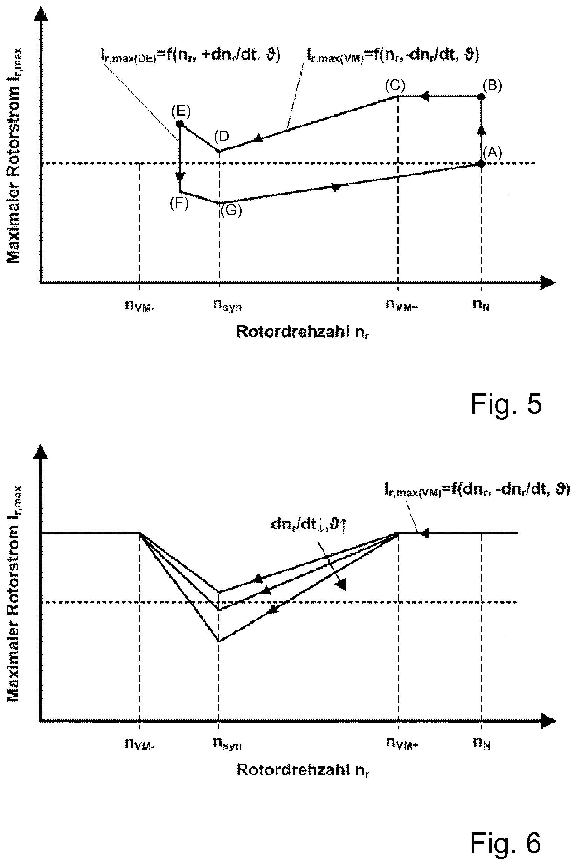

Das erfindungsgemäße Betriebsverfahren nach Fig. 3 ist in den Figuren 5 und 6 zusätzlich veranschaulicht, die beispielhafte Kennlinien des maximalen Rotorstroms $I_{r,max}$ über der Rotordrehzahl $n_r$ in dem VM-Betriebsmodus grafisch darstellen. Es wird angenommen, dass ein Betrieb an der Stromgrenze, also bei dem maximalen Rotorstromgrenzwert $I_{r,max}$ bei voller Wirk- und Blindleistungsbereitstellung möglich ist. Bei Aktivierung des VM-Betriebsmodus wird der Rotorstrom um einen bestimmten Betrag, vorzugsweise um etwa 10%, erhöht, um die Wirkleistungsabgabe der DGASM (z.B. 11) zur Stützung der Netzfrequenz zu erhöhen. Dies entspricht dem Übergang vom Betriebspunkt A in Fig. 5 zu dem Betriebspunkt B. Aufgrund der Anlagencharakteristik führt dies zu einer Drehzahlabsenkung, wie dies in Fig. 5 durch den Übergang des Betriebspunktes von B zu C angezeigt ist. Im Betriebspunkt C erreicht die Rotordrehzahl den vorbestimmten Bereich [$n_{VM-}$; $n_{VM+}$], in dem der maximale Rotorstromgrenzwert $I_{r,max}$ geeignet reduziert wird. Wie in Fig. 5 dargestellt, wird der maximale Rotorstromgrenzwert bis zum Erreichen der Synchrondrehzahl $n_{syn}$ hier zunehmend und kontinuierlich reduziert. Es wäre aber auch möglich, den maximalen Rotorstrom hier in mehreren Stufen, entsprechend einer Treppenfunktion oder auch gemäß einer kontinuierlichen Funktion, die keine lineare Funktion ist, zu reduzieren.

Die Abhängigkeit der Reduktion des maximalen Rotorstromgrenzwerts $I_{r,max}$ von der Drehzahländerungsrate $dn_r/dt$ des Rotors ist in Fig. 6 veranschaulicht. Wie ersichtlich, wird der maximale Rotorstromgrenzwert bei Annäherung an die Synchrondrehzahl $n_{syn}$ umso mehr reduziert, je kleiner die Drehzahländerungsrate $dn_r/dt$ der Rotordrehzahl $n_r$ ist. Der Grund hierfür ist, dass bei einer kleineren Drehzahländerungsrate der Synchronpunkt langsamer durchlaufen wird oder die Betriebsdauer im Bereich des Synchronpunktes länger ist, was eine höhere thermische Belastung der Leistungshableiterbauelemente aufgrund der sich zunehmend erwärmenden Komponenten mit größeren thermischen Zeitkonstanten (bspw. Kühlkörper) zur Folge hat. Um dem entgegenzuwirken, wird der maximale Rotorstromgrenzwert $I_{r,max}$ umso mehr reduziert, je kleiner die Drehzahländerungsrate $dn_r/dt$ ist. Dies kann gemäß einer kontinuierlichen, vorzugsweise linearen oder auch nichtlinearen Funktion oder in mehreren im Voraus festgelegten Stufen mit jeweils konstanten Werten erfolgen. Jedenfalls wird durch die Reduktion des maximalen Rotorstromgrenzwertes $I_{r,max}$ die thermische Belastung im Bereich des Synchronpunktes passend begrenzt.

Nach Durchlaufen der Synchrondrehzahl $n_{syn}$ wird der maximale Rotorstromgrenzwert $I_{r,max}$ wieder in Abhängigkeit von der Rotordrehzahl $n_r$ und der Änderungsrate der Rotordrehzahl $dn_r/dt$ erhöht, bis im Betriebspunkt E die Primärregelung im Netz einsetzt und der VM-Betriebsmodus in den Drehzahlerholungsmodus übergehen kann. Im Allgemeinen erfolgt der Übergang vom VM-Betrieb zum Betrieb der Drehzahlerholung nach ungefähr 10-15 Sekunden.

Bei der Drehzahlerholung wird das Kraftwerk wieder entsprechend dem Normalbetrieb betrieben. Der Arbeitspunkt geht also auf der Anlagenkennlinie von dem Betriebspunkt F zu dem Betriebspunkt A über, in dem wieder nominelle Leistung eingespeist wird. Die reduzierte Drehzahl nimmt ausgehend von dem untersynchronen Bereich [$n_{VM-}$; $n_{syn}$] zu dem übersynchronen Bereich [$n_{syn}$; $n_{VM+}$] wieder zu. Dabei wird im Betriebspunkt G erneut die Synchrondrehzahl $n_{syn}$ durchlaufen. Nachdem die Halbleiterleistungsbauelemente durch den VM-Betrieb bereits thermisch vorbelastet wurden und erhöhte Sperrschichttemperatur aufweisen, wird zu Beginn der Drehzahlerholung der maximale Rotorstrom $I_{r,max}$ um einen bestimmten Betrag, vorzugsweise 10% oder mehr, reduziert, wie dies in Fig. 5 durch den Übergang E-F dargestellt ist. Somit liegt die Grenzwertkurve F-G-A für die Drehzahlerholung bzw. eine positive Drehzahländerungsrate, deutlich unterhalb der Grenzwertkurve für eine negative Drehzahländerungsrate in dem VM-Betriebsmodus.

Figuren 4a und 4b veranschaulichen die elektrischen Betriebsparameter, einschließlich der Anlagenleistung, der Rotordrehzahl, der Rotorfrequenz, des Rotorstroms und der beispielhaft berechneten Sperrschichttemperaturen, die auf den maximalen Auslegungs- bzw. Grenzwert bezogen sind, ähnlich den Figuren 2a und 2b. Aus Fig. 4b ist ersichtlich, dass im Zeitpunkt von 5 Sekunden der VM-Betriebsmodus eingeleitet wird und der Rotorstrom um etwa 10% erhöht wird, um die Wirkleistungsbereitstellung zu erhöhen und die Netzfrequenz zu stützen. Die Rotorfrequenz nimmt anschließend im Bereich zwischen 5 und 15 Sekunden aufgrund der Anlagencharakteristik ab. In diesem Bereich wird auch entsprechend dem erfindungsgemäßen Verfahren der maximale Rotorstromgrenzwert reduziert, was durch die Abnahme des Rotorstroms in Fig. 4b veranschaulicht ist. Im Bereich von 13 Sekunden wird der Synchronpunkt der Anlage durchfahren, in dem sich höhere Sperrschichttemperaturen aufgrund der tiefen Ausgangsfrequenzen im 0 Hz-Bereich ausbilden. Nach etwa 15 Sekunden beginnt die Drehzahlerholung. Die Drehzahlerholung durchläuft im dargestellten Beispiel beim Übergang vom untersynchronen zum übersynchronen Betrieb erneut den Synchronpunkt $n_{syn}$. Das geschieht jedoch bei einem reduzierten Rotorstrom, weil der maximale Rotorstromgrenzwert $I_{r,max}$ beim Übergang vom VM-Betrieb zur Drehzahlerholung hinreichend reduziert wird. Dadurch kann unter Umständen auch die Leistungsbereitstellung an dem Rotor etwas reduziert sein, was sich in dem mit Strichlinien dargestellten geänderten Verlauf der Leistungskurve im Bereich 42 des Synchronpunktes zeigt. Dies ist jedoch unerheblich, weil nach Beendigung des VM-Betriebs hier keine Netzfrequenzstützung mehr erforderlich ist. Ein Vergleich der Figuren 2b und 4b verdeutlicht jedoch, dass durch das erfindungsgemäße Verfahren die thermische Belastung der Leistungshalbleiterbauelemente, insbesondere IGBT-Schalter und Dioden, deutlich reduziert werden kann und die Sperrschichttemperaturen derselben wesentlich niedriger gehalten werden können, so dass Auslegungs- oder Grenzwerte im Bereich des Synchronpunktes der Anlage nicht überschritten werden. Die Bauteile werden nicht unzulässig belastet, und es kann eine thermische Marge für etwaige Netzfehler sichergestellt werden. Zusätzlich kann auch eine längere Nutzungslebensdauer der Umrichtervorrichtung ermöglicht werden, auch weil die Leistungshalbleiterbauelemente einer verringerten Lastwechselbeanspruchung unterworfen werden und damit sich der Lebensdauerverbrauch in dieser Betriebsart verringert.

Figuren 5 und 6 zeigen ferner eine weitere optionale Modifikation des erfindungsgemäßen Verfahrens. Insbesondere kann der maximale Rotorstromgrenzwert $I_{r,max}$ zusätzlich in Abhängigkeit von einer oder mehreren an oder in der Umrichtervorrichtung (z.B. 26) gemessenen Betriebstemperaturen $\vartheta$ bestimmt bzw. modifiziert werden. Bspw. kann die Bauteiltemperatur der Leistungshalbleiterbauelemente durch eine Temperaturmessvorrichtung (z.B. 252) erfasst werden. Ferner können bedarfsweise Temperaturen an Kühlkörpern und/oder eine Vorlauftemperatur eines Kühlfluids des Kühlsystems der Umrichtervorrichtung erfasst werden. Der Rotorstromgrenzwert $I_{r,max}$ kann dann als Funktion dieser Temperatur(en) eingestellt bzw. nachgeführt werden. Dies kann durch thermische Berechnung oder anhand wenigstens einer vorgespeicherten Nachschlagetabelle erfolgen. Jedenfalls wird der maximale Rotorstromgrenzwert $I_{r,max}$ kontinuierlich oder stufenweise umso mehr verringert, je höher die eine oder mehreren aktuell erfassten Betriebstemperaturen sind. Dies trägt weiter zur optimierten Funktionsweise im VM-Betriebsmodus unter thermischer Entlastung der Leistungshalbleiterbauelemente beim Durchlaufen des Synchronpunktes bei.

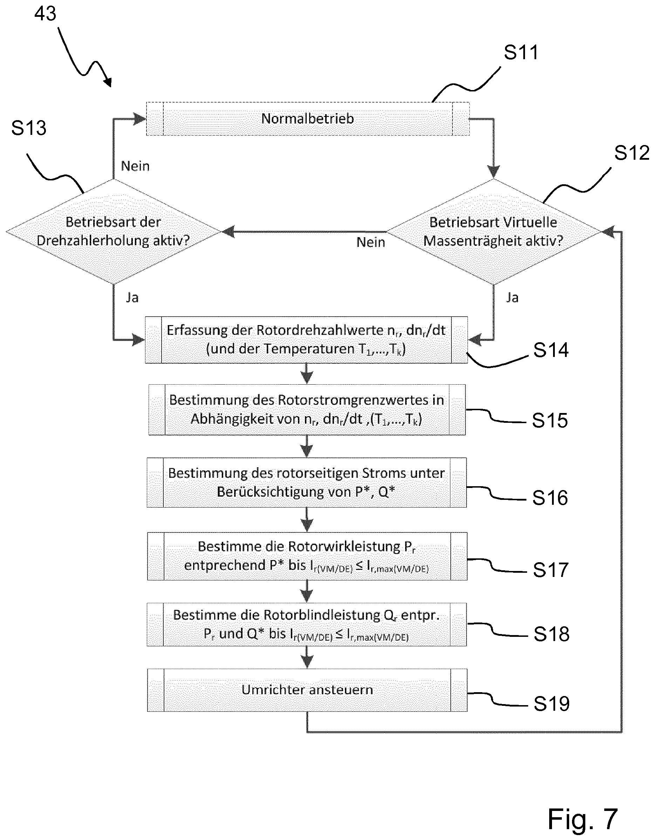

Fig. 7 zeigt eine vorteilhafte Weiterbildung eines erfindungsgemäßen Verfahrens 43. Sofern Schritte des Verfahrens 43 in Fig. 7 mit den Schritten S1-S5 des Verfahrens 41 nach Fig. 3 übereinstimmen, wird unter Zugrundelegung gleicher Bezugszeichen auf die vorstehenden Ausführungen zu dem Verfahren 41 Bezug genommen, die hier ebenfalls entsprechend gelten.

Im Schritt S11 wird das Kraftwerkssystem, einschließlich der Umrichtervorrichtung, im Normalbetrieb betrieben.

Im Schritt S12 wird überprüft, ob der VM-Betriebsmodus aktiv ist. Falls dies nicht der Fall ist, wird anschließend im Schritt S13 überprüft, ob die Betriebsart der Drehzahlerholung aktiv ist. Verneinendenfalls kehrt das Verfahren zum Schritt S11 zurück.

Falls eine der Betriebsarten der virtuellen Massenträgheit oder der Drehzahlerholung aktiv ist, geht das Verfahren zum Schritt S14 über, in dem die aktuellen Rotordrehzahlwerte $n_r$ und $dn_r/dt$ erfasst bzw. bestimmt werden. Die Rotordrehzahl kann durch einen Drehzahlsensor direkt gemessen werden. Die Änderungsrate der Rotordrehzahl $dn_r/dt$ kann entweder mit einem Beschleunigungsmesser direkt erfasst oder anhand der erfassten Rotordrehzahlwerte bspw. mittels Inkrementalgeber mechanisch, photoelektrisch oder magnetisch anhand aufeinanderfolgender Abtastwerte rechnerisch bestimmt werden. Im Schritt S14 können auch Temperaturen $T_1,...,T_k$, wie bspw. Bauteiltemperaturen an Leistungshalbleitern, Kühlkörpertemperaturen, Kühlfluidtemperaturen, Umgebungstemperaturen oder dgl., bestimmt werden.

Im Schritt S15 wird der Rotorstromgrenzwert in Abhängigkeit von den aktuellen Werten der Rotordrehzahl $n_r$

und der Drehzahländerungsrate $dn_r/dt$ und optional der erfassten Temperaturen $T_1,...,T_k$ bestimmt. Insbesondere wird der Rotorstromgrenzwert in dem vorbestimmten Drehzahlbereich [$n_{VM-}$; $n_{VM+}$] entsprechend einer mathematischen Funktion, einer kontinuierlichen Funktion oder einer Treppenfunktion der dgl., geeignet reduziert, um die thermische Belastung und Sperrschichttemperaturen der Leistungshalbleiterbauelemente in der Umgebung des Synchronpunktes zu reduzieren.

Im Schritt S16 wird der Rotorstrom $I_r$ unter Berücksichtigung der Leistungsanforderungen für Wirkleistung P* und Blindleistung Q* bestimmt. Die Leistungsanforderungen bzw. -vorgaben für die Wirk- und Blindleistung P*, Q* können der Steuereinrichtung 24 der Umrichtervorrichtung 26 von dem übergeordneten Steuersystem 31 mitgeteilt werden. Anhand dieser Größen kann der Sollwert $I_r$ des Rotorstroms, der an dem Rotor der DGASM bereitgestellt werden soll, bestimmt werden.

Im Schritt S17 wird die Rotorwirkleistung $P_r$ entsprechend der Wirkleistungsanforderung P* derart bestimmt, dass der Rotorstrom $I_r$ den maximalen Rotorstrom $I_{r,max}$ nicht überschreitet. Insofern wird der ermittelte Rotorstromsollwert $I_r$ zur Bestimmung der Rotorwirkleistung $P_r$ herangezogen, wenn dieser kleiner als der maximale Rotorstromgrenzwert $I_{r,max}$ ist, während ansonsten der maximale Rotorstromgrenzwert $I_{r,max}$ zur Bestimmung der Rotorwirkleistung $P_r$ herangezogen wird.

Im Schritt S18 wird entsprechend die Rotorblindleistung $Q_r$, die an dem Rotor der DGASM bereitgestellt werden soll bzw. kann, in Abhängigkeit von der Rotorwirkleistung $P_r$ und der Blindleistungsanforderung Q* derart bestimmt, dass der Rotorstrom $I_r$ den maximalen Rotorstromgrenzwert $I_{r,max}$ nicht überschreitet. D.h., sofern der ermittelte Rotorstromsollwert $I_r$ kleiner als der maximale Rotorstromgrenzwert $I_{r,max}$ ist, wird der Anteil des Rotorstroms, der nicht zur Bereitstellung der Rotorwirkleistung $P_r$ erforderlich ist, für die Bestimmung der Rotorblindleistung $Q_r$ herangezogen.

Im Schritt S19 wird der Umrichter entsprechend angesteuert, um die in den Schritten S17 und S18 bestimmten Sollwerte für die Rotorwirkleistung $P_r$ und die Rotorblindleistung $Q_r$ bereitzustellen.

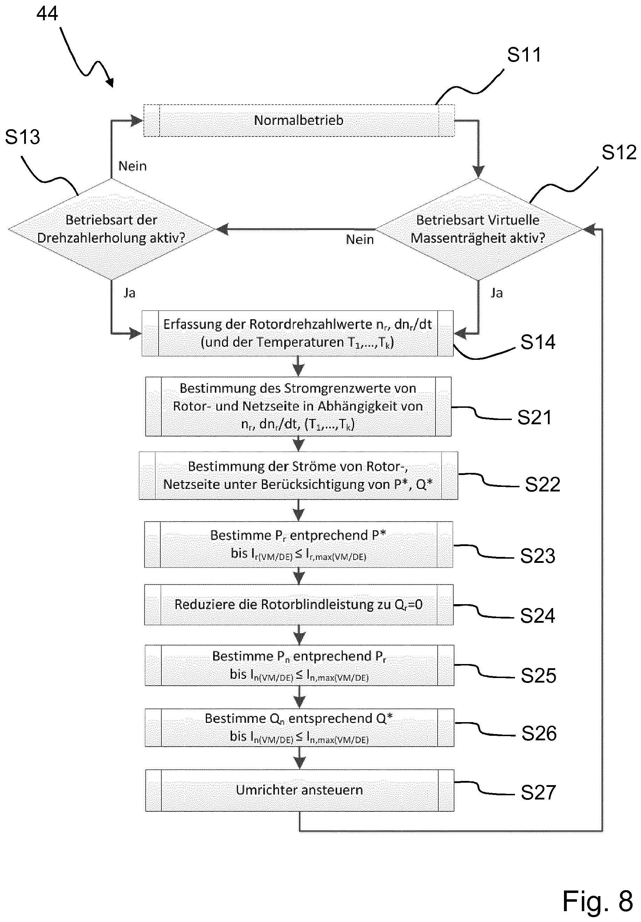

Fig. 8 zeigt eine weitere Ausführungsform eines erfindungsgemäßen Verfahrens 44. Soweit Übereinstimmung mit Schritten der Verfahren 41 und 43 der Figuren 3 und 7 vorliegt, wird unter Zugrundelegung gleicher Bezugszeichen auf die vorstehenden Ausführungen zu den jeweiligen Verfahrensschritten der Figuren 3 und 7 Bezug genommen, die hier entsprechend gelten.

Das Verfahren 44 nach Fig. 8 weist zunächst die Schritte S11-S14 des Verfahrens nach Fig. 7 auf. Der nachfolgende Verfahrensschritt S21 entspricht im Wesentlichen dem Verfahrensschritt S15 nach Fig. 7, wobei hier zusätzlich zu dem Rotorstromgrenzwert $I_{r,max}$ auch ein Grenzwert $I_{n,max}$ für den Strom auf der Netzseite des Umrichters in Abhängigkeit von der Rotordrehzahl $n_r$ und der Änderungsrate $dn_r/dt$ und optional in Abhängigkeit von den gemessenen Betriebstemperaturen ($T_1,...,T_k$) bestimmt wird.

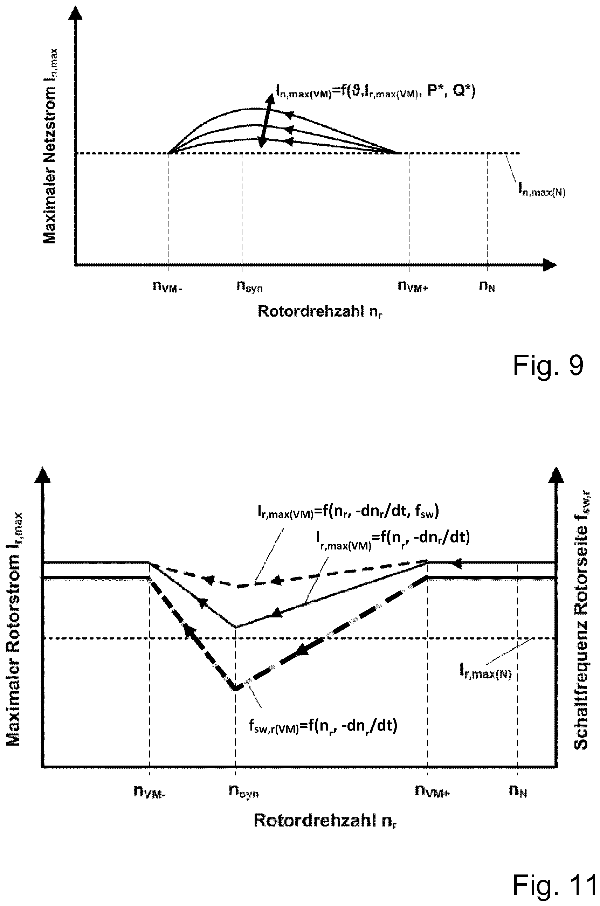

Wie insbesondere aus Fig. 9 ersichtlich, die eine grafische Darstellung des maximalen netzseitigen Stromgrenzwertes $I_{n,max}$ über der Rotordrehzahl $n_r$ gemäß einer beispielhaften Ausführungsform der Erfindung veranschaulicht, kann der netzseitige Stromgrenzwert $I_{n,max}$ im VM-Betrieb sowie bei der Drehzahlerhöhung in dem vorbestimmten Bereich [$n_{VM-}$; $n_{VM+}$] in Abhängigkeit von dem maximalen Rotorstromgrenzwert $I_{r,max}$ und der Leistungsanforderung P*, Q* über den maximalen Nennstrom $I_{n,max}(N)$ im normalen Betrieb hinaus erhöht werden, um eine reduzierte Blindleistungsbereitstellung aufgrund des reduzierten Rotorstroms wenigstens teilweise zu kompensieren. Dieser Umstand resultiert aus der Tatsache, dass der netzseitige Stromrichter an der nahezu konstanten Netzfrequenz (50 bzw. 60Hz) liegt und nicht der Herausforderung sehr geringer Ausgangsfrequenzen unterliegt. Der maximale Stromgrenzwert $I_{n,max}$ für die Netzseite kann entsprechend einer kontinuierlichen Funktion oder einer Treppenfunktion im Wesentlichen umgekehrt proportional zu dem Rotorstromgrenzwert $I_{r,max}$ erhöht werden. Mit steigenden Betriebstemperaturen sollte der Stromgrenzwert $I_{n,max}$ für die Netzseite reduziert werden.

Im Schritt S22 wird analog zum Schritt S16 nach Fig. 7 der Sollwert $I_r$ für den Strom der Rotorseite unter Berücksichtigung der Leistungsvorgabewerte P*, Q* bestimmt. Zusätzlich wird auch der Stromsollwert $I_n$ für die Netzseite bestimmt.

Ferner wird im Schritt S23, wie im Schritt S17 nach Fig. 7, die Rotorwirkleistung $P_r$ entsprechend der Wirkleistungsanforderung P* derart bestimmt, dass der maximale Rotorstrom $I_r$ den maximalen Grenzwert $I_{r,max}$ für den Rotorstrom nicht überschreitet.

Im Schritt S24 wird im Unterschied zum Schritt S18 nach Fig. 7 der Rotorblindleistungssollwert unabhängig davon, ob der Rotorstrom $I_r$ den maximalen Rotorstromgrenzwert $I_{r,max}$ erreicht bzw. überschreitet oder nicht, zu null gesetzt. Infolgedessen sorgt der rotorseitige Stromrichter (z.B. 18) bei der anschließenden Ansteuerung des Umrichters im Schritt S27 nur für die Bereitstellung von Wirkleistung an dem Rotor. Es wird keine Blindleistung an dem Rotor bereitgestellt.

Im Schritt S25 wird die Wirkleistung für die Netzseite des Umrichters entsprechend der Wirkleistung auf der Rotorseite des Umrichters festgelegt, so dass der Strom auf der Netzseite des Umrichters den maximalen Grenzwert $I_{n,max}$ für den netzseitigen Strom nicht überschreitet. D.h., der netzseitige Stromrichter kann anschließend im Schritt S27 passend angesteuert werden, um den erforderlichen Wirkleistungsfluss entsprechend der von dem rotorseitigen Stromrichter geforderten Wirkleistung $P_r$ zu ermöglichen.

Im Schritt S26 wird die von dem netzseitigen Stromrichter bereitzustellende Blindleistung $Q_n$ entsprechend der Blindleistungsanforderung Q* derart bestimmt, dass der Stromgrenzwert $I_{n,max}$ für die Netzseite nicht überschritten wird. Sofern der ermittelte Strom $I_n$ für die Netzseite den maximalen Grenzwert $I_{n,max}$ nicht überschreitet, kann der Umrichter im nachfolgenden Schritt S27 derart angesteuert werden, dass der gesamte Blindleistungsbedarf entsprechend der Leistungsanforderung Q* durch den netzseitigen Stromrichter gedeckt wird, während der rotorseitige Stromrichter für die Bereitstellung der Wirkleistung sorgt. Durch die erfindungsgemäße Aufteilung der Wirk- und Blindleistungsbereitstellung innerhalb des Umrichters in Verbindung mit der Begrenzung des Rotorstroms können Leistungsanforderungen weitgehend erfüllt werden, während die Leistungshalbleiterbauelemente des Umrichters, insbesondere des rotorseitigen Stromrichters, vor thermischer Überlastung und Überschreitung maximal zulässiger Sperrschichttemperaturen geschützt werden.

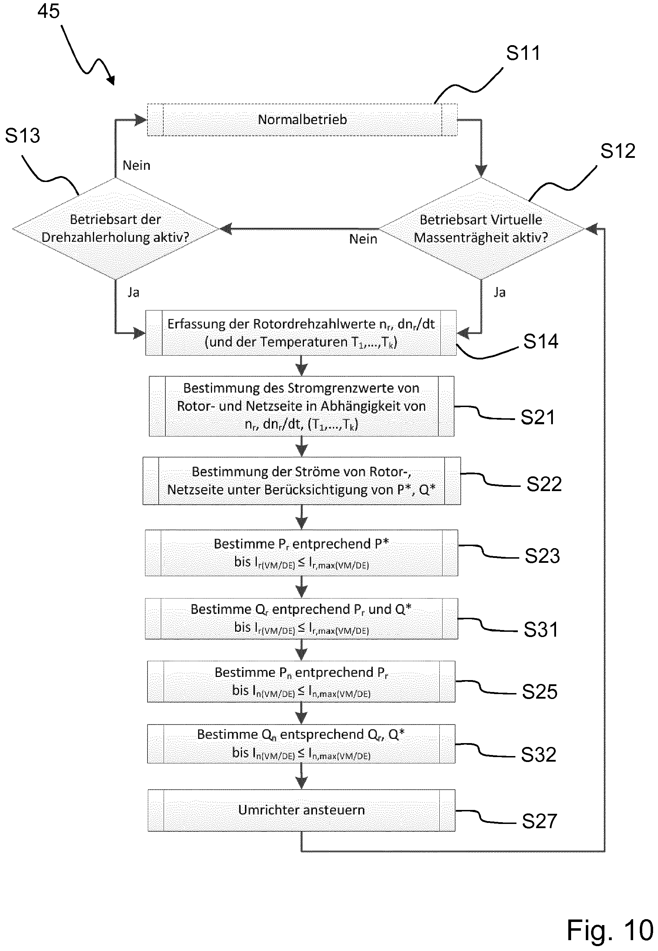

Eine weitere Ausführungsform eines erfindungsgemäßen Verfahrens 45 ist in Fig. 10 veranschaulicht. Soweit Übereinstimmung in den Verfahrensschritten mit den vorstehend beschriebenen Ausführungsformen, insbesondere der Ausführungsform nach Fig. 8, besteht, wird unter Zugrundelegung gleicher Bezugszeichen auf die vorstehende Beschreibung verwiesen, die hier entsprechend gilt.

Das Verfahren nach Fig. 10 weist zunächst die Schritte S11-S14 und S21-S23 auf, die mit den gleich bezeichneten Schritten in Fig. 8 übereinstimmen. Im anschließenden Schritt S31 wird im Unterschied zum Schritt S24 nach Fig. 8 die Rotorblindleistung nicht zu null reduziert. Stattdessen wird der Blindleistungssollwert für den rotorseitigen Stromrichter entsprechend dem Wirkleistungssollwert $P_r$ und der Blindleistungsanforderung Q* derart bestimmt, dass der Rotorstrom $I_r$ den maximalen Rotorstromgrenzwert $I_{r,max}$ nicht überschreitet. Folglich kann der rotorseitige Stromrichter dann angesteuert werden, um neben der erforderlichen Wirkleistung $P_r$ auch wenigstens einen Teil $Q_r$ der benötigten Blindleistung Q* bereitzustellen.

Der nachfolgende Schritt S25 in Fig. 10 entspricht dem Schritt S25 in Fig. 8, in dem die Blindleistung für die Netzseite des Umrichters entsprechend dem Wirkleistungssollwert derart bestimmt wird, dass der Strom auf der Netzseite des Umrichters den maximalen Grenzwert $I_{n,max}$ für den Strom auf der Netzseite nicht überschreitet.

Der nachfolgende Schritt S32 in Fig. 10 entspricht weitgehend dem Schritt S26 in Fig. 8, wobei jedoch für die Bestimmung des Blindleistungssollwertes $Q_n$, der durch den netzseitigen Stromrichter bereitgestellt werden soll, neben der Blindleistungsanforderung Q* auch der durch den rotorseitigen Stromrichter bereitgestellte Blindleistungsanteil $Q_r$ berücksichtigt wird. Hierbei wird sichergestellt, dass der Strom $I_n$ auf der Netzseite des Umrichters den maximalen Grenzwert $I_{n,max}$ für diesen Strom nicht überschreitet.

Wenn der Umrichter folglich im Schritt S27 entsprechend angesteuert wird, stellt der rotorseitige Stromrichter die Wirkleistung $P_r$ und zumindest einen Anteil der benötigten Blindleistung $Q_r$ bereit, während der netzseitige Stromrichter angesteuert wird, um den Wirkleistungsfluss zu ermöglichen und ferner einen zusätzlichen Anteil $Q_n$ der Blindleistung bereitzustellen, um die durch den rotorseitigen Stromrichter aufgrund der Reduktion des Rotorstroms unzureichende Blindleistungsbereitstellung wenigstens teilweise zu kompensieren. Hier wird in dem Betrieb der virtuellen Massenträgheit bei reduziertem Rotorstrom zur thermischen Entlastung von Bauelementen die Blindleistungsbereitstellung besonders günstig auf die beiden Stromrichter (z.B. 18, 19) des Umrichters (z.B. 17) aufgeteilt.

Es versteht sich, dass in den vorstehend erläuterten Ausführungsformen des Verfahrens die maximalen Stromgrenzwerte für die Rotor- und Netzseite, $I_{r,max}$ bzw. $I_{n,max}$, in der im Zusammenhang mit den Figuren 5, 6 und 9 erläuterten Weise und für die Betriebsart der virtuellen Massenträgheit einerseits und für die Drehzahlerholung andererseits unterschiedlich bestimmt werden können, wie dies durch die Indizes "VM" und "DE" bei den jeweiligen Strömen und Grenzwerten angezeigt ist. Wie oben näher ausgeführt, ist zumindest der maximale Rotorstromgrenzwert $I_{r,max(DE)}$ oder sind beide Grenzwerte $I_{r,max(DE)}$ und $I_{n,max(DE)}$ für die Drehzahlerholung vorzugsweise kleiner als $I_{r,max(VM)}$ bzw. $I_{n,max(VM)}$ im VM-Betriebsmodus.

Eine weitere Modifikation der Erfindung ist in Fig. 11 veranschaulicht. Fig. 11 stellt neben dem maximalen Rotorstrom $I_{r,max}$ ferner die Schaltfrequenz $f_{sw,r}$ auf der Rotorseite in Abhängigkeit von der Rotordrehzahl $n_r$ grafisch dar. Wie daraus ersichtlich, kann die Schaltfrequenz auf der Rotorseite in der Betriebsart der virtuellen Massenträgheit in Abhängigkeit von der Rotordrehzahl $n_r$ und der Änderungsrate der Rotordrehzahl, $dn_r/dt$ in dem vorbestimmten Bereich um die Synchrondrehzahl $n_{syn}$ herum reduziert werden. Dies kann im Wesentlichen ähnlich der Reduktion des maximalen Rotorstromgrenzwertes $I_{r,max}$ erfolgen. Die reduzierte Schaltfrequenz im Bereich der Synchrondrehzahl hat geringere Schaltverluste und somit eine geringere thermische Belastung der Leistungshalbleiterbauelemente der Umrichtervorrichtung in diesem Bereich zur Folge. Die reduzierte Schaltfrequenz kann ferner zur weiteren Modifikation des maximalen Rotorstromgrenzwertes $I_{r,max}$ herangezogen werden. Wie aus Fig. 11 ersichtlich, kann, wenn die Schaltfrequenz des rotorseitigen Stromrichters reduziert wird, der maximale Rotorstromgrenzwert umgekehrt wieder geringfügig erhöht werden, wie dies durch die oberste gestrichelte Kurve angezeigt ist. Die thermische Belastung der Leistungshalbleiterbauelemente bleibt hier gleich derjenigen, die sich mit weiter reduziertem Rotorstromgrenzwert ohne Berücksichtigung der Schaltfrequenz ergibt.

Es sollte verstanden werden, dass anstelle der Rotordrehzahl $n_r$ auch die Frequenz $f_r$ des Rotors 13 gemessen oder bestimmt und als Basis für die Bestimmung des aktuellen maximallen Rotorstromgrenzwertes $I_{r,max}$ in einer belie-

bigen vorstehend beschriebenen Ausführungsform des erfindungsgemäßen Verfahrens, der Umrichtervorrichtung 26 bzw. des Kraftwerks 1 verwendet werden könnte. Die Rotordrehzahl $n_r$ und die Rotorfrequenz $f_r$ sind über den Schlupf $s$ entsprechend der Beziehung $s = (n_{syn} - n_r) / n_{syn} = f_r/f_s$ fest miteinander verknüpft. Insofern gelten die vorstehenden Ausführungen in Bezug auf die Rotordrehzahl $n_r$ als die Bezugsgröße in gleicher Weise auch für die Rotorfrequenz $f_r$ als Bezugsgröße, wenn die Rotordrehzahl $n_r$, die Änderungsrate $dn_r$ /dt der Rotordrehzahl und der vorbestimmte Drehzahlbereich $[n_{VM-}; n_{VM+}]$ um eine Synchrondrehzahl $n_{syn}$ des Rotors 13 herum durch die Rotorfrequenz $f_r$, die Änderungsrate $df_r$ /dt der Rotorfrequenz bzw. den vorbestimmten Frequenzbereich $[f_{VM-}; f_{VM+}]$ um die Nullfrequenz $f_r=0$ des Rotors 13 ersetzt werden.

Es ist ein Verfahren zum Betreiben eines Kraftwerks 1 mit einer doppelt gespeisten Asynchronmaschine 11 und einem Umrichter 17 in einem Betriebsmodus der virtuellen Massenträgheit zur Stützung der Netzfrequenz offenbart. Das Verfahren weist auf, dass, wenn eine aktuelle mechanische Drehzahl $n_r$ des Rotors 13 in einem vorbestimmten Drehzahlbereich $[n_{VM-}; n_{VM+}]$ um eine Synchrondrehzahl $n_{syn}$ des Rotors 13 herum oder eine aktuelle Rotorfrequenz $f_r$ in einem vorbestimmten Frequenzbereich $[f_{VM-}; f_{VM+}]$ um eine Nullfrequenz des Rotors 13 herum liegt, ein aktueller maximalen Stromgrenzwertes $I_{r,max}$ für einen durch den Umrichter 17 bereitzustellenden Rotorstrom in Abhängigkeit von den aktuellen Werten der Drehzahl $n_r$ bzw. Rotorfrequenz $f_r$ und der Drehzahländerungsrate $dn_r/dt$ bzw. Frequenzänderungsrate $df_r/dt$ des Rotors 13 reduziert wird. Das Verfahren weist ferner auf, dass ein aktueller Sollwert $I_r$ für den Rotorstrom basierend auf einer Leistungsanforderung P*, Q* vom Netz 2 in Abhängigkeit von gemessenen aktuellen Betriebsgrößen bestimmt wird. Das Verfahren weist ferner auf, dass der Umrichter 17 angesteuert wird, um pulsartig sinusförmige Spannungen und Ströme mit dem aktuellen Rotorstromsollwert $I_r$, begrenzt auf den aktuellen maximalen Rotorstromgrenzwert $I_{r,max}$ an den Rotor 13 zu schalten. Eine Umrichtervorrichtung 26 und ein Kraftwerk 1 mit dieser sind ebenfalls offenbart.

## Patentansprüche

1.  Verfahren zum Betreiben eines Kraftwerks (1) mit einer doppelt gespeisten Asynchronmaschine (11), deren Stator (12) mit einem elektrischen Netz (2) verbunden ist und deren Rotor (13) über einen Umrichter (17) mit dem Netz (2) verbunden ist, wobei das Kraftwerk (1) einen normalen Betriebsmodus, in dem es entsprechend einer vorbestimmten Anlagenkennlinie betrieben wird, um nominelle Leistung in das Netz (2) einzuspeisen, und ferner einen Betriebsmodus der virtuellen Massenträgheit aufweist, in dem die Leistungseinspeisung über die nominelle Anlagenleistung hinaus erhöht wird, während Rotationsenergie des Rotors (4, 6, 7, 9, 13) abgebaut wird, wobei das Verfahren in dem Betriebsmodus der virtuellen Massenträgheit die Schritte aufweist:

    Bestimmen einer aktuellen Drehzahl ($n_r$) und Drehzahländerungsrate ($dn_r/dt$) des Rotors (13) oder einer aktuellen Rotorfrequenz ($f_r$) und Rotorfrequenzänderungsrate ($df_r/dt$);
    wenn die aktuelle Drehzahl ($n_r$) des Rotors (13) in einem vorbestimmten Drehzahlbereich ($[n_{VM-}; n_{VM+}]$) um eine Synchrondrehzahl ($n_{syn}$) des Rotors (13) herum oder die aktuelle Rotorfrequenz ($f_r$) in einem vorbestimmten Frequenzbereich ($[f_{VM-}; f_{VM+}]$) um eine Nullfrequenz des Rotors (13) herum liegt, Reduzieren eines aktuellen maximalen Stromgrenzwertes ($I_{r,max}$) für einen durch den Umrichter (17) bereitzustellenden Rotorstrom in Abhängigkeit von den ermittelten aktuellen Werten der Drehzahl ($n_r$) und der Drehzahländerungsrate ($dn_r/dt$) bzw. Frequenz ($f_r$) und Frequenzänderungsrate ($df_r/dt$) des Rotors (13);
    Bestimmen eines aktuellen Sollwertes ($I_r$) für den Rotorstrom basierend auf einer zwischen dem Netz (2) und der doppelt gespeisten Asynchronmaschine (11) bereitzustellenden Leistung in Abhängigkeit von gemessenen aktuellen Betriebsgrößen;
    Ansteuern des Umrichters (17), um pulsartig sinusförmige Spannungen und Ströme mit dem aktuellen Rotorstromsollwert ($I_r$) oder, falls der aktuelle Rotorstromsollwert ($I_r$) den aktuellen maximalen Rotorstromgrenzwert ($I_{r,max}$) erreicht oder überschreitet, mit dem aktuellen maximalen Rotorstromgrenzwert ($I_{r,max}$) an den Rotor (13) zu schalten.

2.  Verfahren nach Anspruch 1, wobei der vorbestimmte Drehzahlbereich ($[n_{VM-}; n_{VM+}]$) um die Synchrondrehzahl ($n_{syn}$) herum bzw. der vorbestimmte Frequenzbereich ($[f_{VM-}; f_{VM+}]$) um eine Nullfrequenz des Rotors (13) herum durch eine minimal für den stationären Betrieb vorbestimmte Rotorstromfrequenz ($f_r$) bzw. Drehzahldifferenz der Rotordrehzahl ($n_r$) von der Synchrondrehzahl ($n_{syn}$) definiert ist, die im Bereich von +/- 10 bis 15 % der Statorfrequenz ($f_s$) bzw. der Synchrondrehzahl ($n_{syn}$) liegt.

3.  Verfahren nach Anspruch 1 oder 2, wobei der maximale Rotorstromgrenzwert ($I_{r,max}$) wenigstens in einem Teilbereich des vorbestimmten Drehzahlbereiches ($[n_{VM-}; n_{VM+}]$) bzw. Frequenzbereiches ($[f_{VM-}; f_{VM+}]$) für einen kleineren Betrag der Abweichung der aktuellen Drehzahl ($n_r$) des Rotors (13) von der Synchrondrehzahl ($n_{syn}$) bzw. ein kleineres Verhältnis der Rotor- zu Statorfrequenz ($f_r/f_s$) kleiner ist als für einen größeren Betrag dieser Abweichung bzw. des Verhältnisses.

4. Verfahren nach einem der vorhergehenden Ansprüche, wobei der maximale Rotorstromgrenzwert ($I_{r,max}$) wenigstens in einem Teilbereich des vorbestimmten Drehzahlbereiches ([$n_{VM-}$; $n_{VM+}$]) bzw. Frequenzbereiches ([$f_{VM-}$; $f_{VM+}$]) für einen kleineren Betrag der Drehzahländerungsrate ($dn_r/dt$) bzw. der Frequenzänderungsrate ($df_r/dt$) des Rotors (13) kleiner ist als für einen größeren Betrag der Drehzahländerungsrate ($dn_r/dt$) bzw. der Frequenzänderungsrate ($df_r/dt$) des Rotors (13).

5. Verfahren nach einem der vorhergehenden Ansprüche, wobei der maximale Rotorstromgrenzwert ($I_{r,max}$) in mehreren Teilbereichen des vorbestimmten Drehzahlbereiches ([$n_{VM-}$; $n_{VM+}$]) bzw. Frequenzbereiches ([$f_{VM-}$; $f_{VM+}$]) oberhalb, unterhalb und in der Umgebung der Synchrondrehzahl ($n_{syn}$) bzw. Nullfrequenz des Rotors (13) jeweils einen konstanten Wert aufweist, der jeweils kleiner als derjenige für den Normalbetrieb ist.

6. Verfahren nach einem der vorhergehenden Ansprüche, wobei der maximale Rotorstromgrenzwert ($I_{r,max}$) entsprechend einer mathematischen Funktion der Drehzahl ($n_r$) und Drehzahländerungsrate ($dn_r/dt$) bzw. der Frequenz ($f_r$) und Frequenzänderungsrate ($df_r/dt$) des Rotors (13) kontinuierlich zu der Synchrondrehzahl ($n_{syn}$) des Rotors (13) hin abnimmt.

7. Verfahren nach einem der vorhergehenden Ansprüche, wobei der maximale Rotorstromgrenzwert ($I_{r,max}$) auf einer Grenzwertkurve liegt und wobei die Grenzwertkurve für eine negative Drehzahländerungsrate ($dn_r/dt < 0$) bzw. Frequenzänderungsrate ($df_r/dt < 0$) in dem Betriebsmodus der virtuellen Massenträgheit oberhalb der entsprechenden Grenzwertkurve für eine positive Drehzahländerungsrate ($dn_r/dt > 0$) bzw. Frequenzänderungsrate ($df_r/dt > 0$) liegt, die einem Betriebsmodus der Drehzahlerholung entspricht.

8. Verfahren nach einem der vorhergehenden Ansprüche, wobei der maximale Rotorstromgrenzwert ($I_{r,max}$) bei Einleitung des Betriebsmodus der virtuellen Massenträgheit um wenigstens 5%, vorzugsweise wenigstens 10%, gegenüber dem maximale Rotorstromgrenzwert für den normalen Betriebsmodus erhöht wird und bei einem Wechsel des Betriebsmodus von der virtuellen Massenträgheit zu der Drehzahlerholung um wenigstens 5%, vorzugsweise wenigstens 10%, reduziert wird.

9. Verfahren nach einem der vorhergehenden Ansprüche, wobei der maximale Rotorstromgrenzwert ferner in Abhängigkeit von wenigstens einer an dem Umrichter (17) gemessenen Betriebstemperatur ($T_1...T_k$), vorzugsweise mehreren an dem Umrichter gemessenen Betriebstemperaturen bestimmt wird.

10. Verfahren nach einem der vorhergehenden Ansprüche, wobei der maximale Rotorstromgrenzwert ($I_{r,max}$) ferner in Abhängigkeit von einer Schaltfrequenz ($f_{sw}$) von Leistungshalbleiterschaltelementen des Umrichters (17) bestimmt wird,
wobei die Schaltfrequenz ($f_{sw}$) für Leistungshalbleiterschalter des Umrichters (17) in dem vorbestimmten Drehzahlbereich ([$n_{VM-}$; $n_{VM+}$]]) bzw. Frequenzbereich ([$f_{VM-}$; $f_{VM+}$]) in Abhängigkeit von der Drehzahl ($n_r$) und Drehzahländerungsrate ($dn_r/dt$) bzw. der Frequenz ($f_r$) und Frequenzänderungsrate ($df_r/dt$) des Rotors (13) reduziert wird.

11. Verfahren nach einem der vorhergehenden Ansprüche, wobei eine Steuereinrichtung (24) für den Umrichter (17) eine Unterschreitung eines Schwellenwertes der Netzfrequenz unterhalb der Netznennfrequenz für eine vorgegebene Schwellenwertzeitdauer selbstständig als das Erfordernis einer Netzfrequenzstützung durch den Betriebsmodus der virtuellen Massenträgheit erkennt und daraufhin den Betriebsmodus der virtuellen Massenträgheit selbstständig aktiviert, wobei der Schwellenwert der Netzfrequenz und/oder die Schwellenwertzeitdauer durch ein übergeordnetes Steuersystem (31) für das Kraftwerk (1) oder durch die Steuereinrichtung (24) direkt vorgegeben wird/werden.

12. Verfahren nach einem der vorhergehenden Ansprüche, wobei eine Betriebsart der Drehzahlerholung nach Beendigung des Betriebsmodus der virtuellen Massenträgheit anhand einer Änderung des Vorzeichens der Drehzahländerungsrate ($dn_r/dt$) Frequenzänderungsrate ($df_r/dt$) des Rotors (13) erkannt wird und daraufhin der Rotorstromgrenzwert ($I_{r,max}$) auf einer Grenzwertkurve für die Drehzahlerholung festgelegt wird.

13. Verfahren nach einem der vorhergehenden Ansprüche, wobei der Umrichter (17) einen rotorseitigen Stromrichter (18), der mit dem Rotor (13) der Asynchronmaschine (11) verbunden ist, und einen netzseitigen Stromrichter (19) aufweist, der einerseits mit dem Netz (2) und andererseits über einen Gleichspannungszwischenkreis (21) mit dem rotorseitigen Stromrichter (18) verbunden ist.

14. Verfahren nach Anspruch 13, wobei die von dem rotorseitigen Stromrichter (18) bereitzustellende Wirkleistung ($P_r$) in Abhängigkeit von einer Wirkleistungsanforderung ($P_r{}^*$) bestimmt wird, so dass der resultierende Rotorstromsollwert ($I_r$) den aktuellen maximalen Rotorstromgrenzwert ($I_{r,max}$) nicht überschreitet.

15. Verfahren nach Anspruch 13 oder 14, wobei die von dem rotorseitigen Stromrichter (18) bereitzustellende Blindleistung ($Q_r$) in Abhängigkeit von einer Blindleistungsanforderung ($Q_r{}^*$) und der bereitgestellten Wirkleistung ($P_r$) derart bestimmt wird, dass der resultierende Rotorstromsollwert ($I_r$) den maximalen Rotorstromgrenzwert ($I_{r,max}$) nicht überschreitet.

16. Verfahren nach Anspruch 14 oder 15, wobei für den Fall, dass die aktuell von dem rotorseitigen Stromrichter (18) bereitstellbare Wirkleistung ($P_r$) kleiner ist als die aktuelle Wirkleistungsanforderung ($P_r{}^*$), die von dem rotorseitigen Stromrichter (18) bereitgestellte Blindleistung ($Q_r$) auf null reduziert wird.

17. Verfahren nach einem der Ansprüche 14-16, wobei der rotorseitige Stromrichter (18) und der netzseitige Stromrichter (19) betrieben werden, um ausschließlich Wirkleistung ($P_r$, $P_n$) bereitzustellen.

18. Verfahren nach einem der vorhergehenden Ansprüche, wobei ein aktueller maximaler Netzstromgrenzwert ($I_{n,max}$) für den netzseitigen Stromrichter (19) in dem vorbestimmten Drehzahlbereich ($[n_{VM-};\ n_{VM+}]$) bzw. Frequenzbereich ($[f_{VM-};\ f_{VM+}]]$) in Abhängigkeit von den ermittelten aktuellen Werten der Drehzahl ($n_r$) und Drehzahländerungsrate ($dn_r/dt$) bzw. der Frequenz ($f_r$) und Frequenzänderungsrate ($df_r/dt$) des Rotors (13) und der Leistungsanforderung ($P^*$, $Q^*$) erhöht wird.

19. Verfahren nach einem der Ansprüche 14-18, wobei die von dem netzseitigen Stromrichter (19) bereitzustellende Blindleistung ($Q_n$) bestimmt wird, um eine unzureichende Blindleistungsbereitstellung des rotorseitigen Stromrichters (18) wenigstens teilweise zu kompensieren, sofern der resultierende Netzstromsollwert ($I_n$) den maximalen Netzstromgrenzwert ($I_{n,max}$) nicht überschreitet.

20. Umrichtervorrichtung (26) für eine doppelt gespeiste Asynchronmaschine (11) eines Kraftwerks (1), deren Stator (11) mit einem elektrischen Netz (2) direkt verbunden ist und deren Rotor (13) über die Umrichtervorrichtung (26) mit dem Netz (2) verbunden ist,

   mit einem rotorseitigen Stromrichter (18), der eingerichtet ist, um mit dem Rotor (13) der Asynchronmaschine (11) verbunden zu werden,
   mit einem netzseitigen Stromrichter (19), der eingerichtet ist, um mit dem Netz (2) verbunden zu werden, und der über einen Gleichspannungszwischenkreis (21) mit dem rotorseitigen Stromrichter (18) verbunden ist; und
   mit einer Steuereinrichtung (24) zur Steuerung eines Betriebs der Umrichtervorrichtung (26), wobei die Steuereinrichtung (24) Mittel (30) zur Kommunikation mit einem übergeordneten Steuersystem (31) des Kraftwerks (1) aufweist und eingerichtet ist, um ein Verfahren zum Betreiben des Kraftwerks (1) nach einem beliebigen der vorhergehenden Ansprüche auszuführen.

21. Kraftwerk, insbesondere Windkraftwerk, mit einer doppelt gespeisten Asynchronmaschine (11), deren Stator (11) mit einem elektrischen Netz (2) verbunden ist und deren Rotor (13) über eine Umrichtervorrichtung (26) nach Anspruch 20 mit dem elektrischen Netz (2) verbunden ist, und mit einem Steuersystem (31) zur Steuerung eines Betriebs des Kraftwerks (1), wobei das Steuersystem (1) in Abhängigkeit von Netzparametern und Kraftwerkparametern Anforderungswerte ($P^*$, $Q^*$) für durch das Kraftwerk (1) bereitzustellende Leistung vorgibt und die Steuereinrichtung (24) der Umrichtervorrichtung (26) daraus Sollwerte für die bereitzustellende Statorleistung ($P_s$, $Q_s$) und die durch die Umrichtervorrichtung (26) bereitzustellende Leistung ($P_r$, $Q_r$, $Q_n$) bestimmt und den netzseitigen und den rotorseitigen Stromrichter (18, 19) sowohl im normalen Betriebsmodus als auch im Betriebsmodus der virtuellen Massenträgheit gemäß dem Verfahren eines beliebigen der Ansprüche 1 bis 19 in Abhängigkeit von den bereitzustellenden Leistungssollwerten ($P_s$, $Q_s$, $P_r$, $Q_r$, $Q_n$) steuert.

## Claims

1. A method of operating a power plant (1) comprising a double-fed asynchronous machine (11), the stator (12) of which is connected to an electrical network (2) and the rotor (13) of which is connected to the network (2) via a converter (17), the power plant (1) having a normal operating mode in which it is operated in accordance with a predetermined plant characteristic curve in order to feed nominal power into the network (2), and further having a virtual inertia operating mode in which the power feed is increased beyond the nominal plant power while rotational energy of the rotor (4, 6, 7, 9, 13) is reduced, the method in the virtual inertia operating mode comprising the steps of:

determining a current speed ($n_r$) and speed change rate ($dn_r/dt$) of the rotor (13) and a current rotor frequency ($f_r$) and rotor frequency change rate ($df_r/dt$);

if the current speed ($n_r$) of the rotor (13) is in a predetermined speed range ($[n_{VM-}; n_{VM+}]$) around a synchronous speed ($n_{syn}$) of the rotor (13) or the current rotor frequency ($f_r$) is in a predetermined frequency range ($[f_{VM-}; f_{VM+}]$) around a zero frequency of the rotor (13), reducing a current maximum current limit value ($I_{r,max}$) for a rotor current to be provided by the converter (17) as a function of the determined current values of the speed ($n_r$) and speed change rate ($dn_r/dt$) or the frequency ($f_r$) and frequency change rate ($df_r/dt$) of the rotor (13);

determining a current setpoint ($I_r$) for the rotor current based on a power to be provided between the network (2) and the double-fed asynchronous machine (11) as a function of the measured current operating variables;

controlling the converter (17) to switch pulse-like sinusoidal voltages and currents to the rotor (13) at the current rotor current setpoint ($I_r$) or, if the current rotor current setpoint ($I_r$) reaches or exceeds the current maximum rotor current limit value ($I_{r,max}$), at the current maximum rotor current limit value ($I_{r,max}$).

2. The method according to claim 1, wherein the predetermined speed range ($[n_{VM-}; n_{VM+}]$) around the synchronous speed ($n_{syn}$) or the predetermined frequency range ($[f_{VM-}; f_{VM+}]$) around a zero frequency of the rotor (13) is defined by a minimum rotor current frequency ($f_r$) or speed difference of the rotor speed ($n_r$) from the synchronous speed ($n_{syn}$), predetermined for steady-state operation, which is in the range of +/- 10 to 15 % of the stator frequency ($f_s$) or the synchronous speed ($n_{syn}$).

3. The method according to claim 1 or 2, wherein the maximum rotor current limit value ($I_{r,max}$) is smaller for a smaller amount of deviation of the current speed ($n_r$) of the rotor (13) from the synchronous speed ($n_{syn}$) or a smaller ratio of the rotor to stator frequency ($f_r/f_s$) than for a larger amount of this deviation or the ratio, at least in a sub-range of the predetermined speed range ($[n_{VM-}; n_{VM+}]$) or frequency range ($[f_{VM-}; f_{VM+}]$).

4. The method according to anyone of the preceding claims, wherein the maximum rotor current limit value ($I_{r,max}$) is smaller for a smaller amount of the speed change rate ($dn_r/dt$) or the frequency change rate ($df_r/dt$) of the rotor (13) than for a larger amount of the speed change rate ($dn_r/dt$) or the frequency change rate ($df_r/dt$) of the rotor (13), at least in a sub-range of the predetermined speed range ($[n_{VM-}; n_{VM+}]$) or frequency range ($[f_{VM-}; f_{VM+}]$).

5. The method according to anyone of the preceding claims, wherein the maximum rotor current limit value ($I_{r,max}$) in several sub-ranges of the predetermined speed range ($[n_{VM-}; n_{VM+}]$) or frequency range ($[f_{VM-}; f_{VM+}]$) above, below and in the vicinity of the synchronous speed ($n_{syn}$) or zero frequency of the rotor (13), respectively, has a constant value which is in each case smaller than that for normal operation.

6. The method according to anyone of the preceding claims, wherein the maximum rotor current limit value ($I_{r,max}$) continuously decreases towards the synchronous speed ($n_{syn}$) of the rotor (13) according to a mathematical function of the speed ($n_r$) and the speed change rate ($dn_r/dt$) or the frequency ($f_r$) and the frequency change rate ($df_r/dt$) of the rotor (13).

7. The method according to anyone of the preceding claims, wherein the maximum rotor current limit value ($I_{r,max}$) lies on a limit value curve and wherein the limit value curve for a negative speed change rate ($dn_r/dt < 0$) or frequency change rate ($df_r/dt < 0$) in the virtual inertia operating mode lies above the corresponding limit value curve for a positive speed change rate ($dn_r/dt > 0$) or frequency change rate $df_r/dt > 0$) corresponding to a speed recovery operating mode.

8. The method according to anyone of the preceding claims, wherein the maximum rotor current limit value ($I_{r,max}$) is increased by at least 5%, preferably at least 10%, compared to the maximum rotor current limit for the normal operating mode when the virtual inertia operating mode is initiated, and is reduced by at least 5%, preferably at least 10%, when the operating mode is changed from virtual inertia to speed recovery.

9. The method according to anyone of the preceding claims, wherein the maximum rotor current limit value is further determined as a function of at least one operating temperature ($T_1...T_k$) measured at the converter (17), preferably a plurality of operating temperatures measured at the converter.

**10.** The method according to anyone of the preceding claims, wherein the maximum rotor current limit value ($I_{r,max}$) is further determined as a function of a switching frequency ($f_{sw}$) of power semiconductor switching elements of the converter (17), wherein the switching frequency ($f_{sw}$) for power semiconductor switches of the converter (17) is reduced in the predetermined speed range ([$n_{VM-}$; $n_{VM+}$]) or frequency range ([$f_{VM-}$; $f_{VM+}$]) depending on the speed ($n_r$) and speed change rate ($dn_r/dt$) or the frequency ($f_r$) and frequency change rate ($df_r/dt$) of the rotor (13).

**11.** The method according to anyone of the preceding claims, wherein a control device (24) for the converter (17) automatically detects an undershooting of a threshold value of the network frequency below the nominal network frequency for a predetermined threshold value time period as the requirement for network frequency support by the virtual inertia operating mode and thereupon automatically activates the virtual inertia operating mode, wherein the threshold value of the network frequency and/or the threshold value time period is/are specified directly by a higher-level control system (31) for the power plant (1) or by the control device (24).

**12.** The method according to anyone of the preceding claims, wherein a speed recovery operating mode after termination of the virtual inertia operating mode is detected based on a change in sign of the speed change rate ($dn_r/dt$) or frequency change rate ($df_r/dt$) of the rotor (13) and thereupon the rotor current limit value ($I_{r,max}$) is set on a speed recovery limit value curve.

**13.** The method according to anyone of the preceding claims, wherein the converter (17) comprises a rotor-side converter (18), which is connected to the rotor (13) of the asynchronous machine (11), and a network-side converter (19), which is connected on the one hand to the network (2) and on the other hand to the rotor-side converter (18) via a DC voltage intermediate circuit (21).

**14.** The method according to claim 13, wherein the active power ($P_r$) to be provided by the rotor-side converter (18) is determined as a function of an active power demand ($P_r$*) so that the resulting rotor current setpoint ($I_r$) does not exceed the current maximum rotor current limit ($I_{r,max}$).

**15.** The method according to claim 13 or 14, wherein the reactive power ($Q_r$) to be provided by the rotor-side converter (18) is determined as a function of a reactive power demand ($Q_r$*) and the provided active power ($P_r$) in such a way that the resulting rotor current setpoint ($I_r$) does not exceed the maximum rotor current limit value ($I_{r,max}$).

**16.** The method according to claim 14 or 15, wherein, in case that the active power ($P_r$) that can currently be provided by the rotor-side converter (18) is smaller than the current active power demand ($P_r$*), the reactive power ($Q_r$) provided by the rotor-side converter (18) is reduced to zero.

**17.** The method of anyone of the claims 14-16, wherein the rotor-side converter (18) and the network-side converter (19) are operated to provide active power ($P_r$, $P_n$) only.

**18.** The method according to anyone of the preceding claims, wherein a current maximum network current limit value ($I_{n,max}$) for the network-side converter (19) in the predetermined speed range ([$n_{VM-}$; $n_{VM+}$]) or frequency range ([$f_{VM-}$; $f_{VM+}$]) is increased in dependence on the determined current values of the speed ($n_r$) and speed change rate ($dn_r/dt$) or the frequency ($f_r$) and frequency change rate ($df_r/dt$) of the rotor (13) and the power demand ($P$*, $Q$*).

**19.** The method according to anyone of the claims 14-18, wherein the reactive power ($Q_n$) to be provided by the network-side converter (19) is determined in order to at least partially compensate for insufficient reactive power provision by the rotor-side converter (18), provided that the resulting network current setpoint ($I_n$) does not exceed the maximum network current limit ($I_{n,max}$) .

**20.** A converter device (26) for a double-fed asynchronous machine (11) of a power plant (1), the stator (11) of which is directly connected to an electrical network (2) and the rotor (13) of which is connected to the network (2) via the converter device (26), comprising:

   a rotor-side converter (18) arranged to be connected to the rotor (13) of the asynchronous machine (11),
   a network-side converter (19) arranged to be connected to the network (2) and connected to the rotor-side converter (18) via a DC voltage intermediate circuit (21); and
   a control device (24) for controlling operation of the converter device (26), wherein the control device (24) comprises means (30) for communicating with a higher-level control system (31) of the power plant (1) and is configured to perform a method of operating the power plant (1) according to anyone of the preceding claims.

21. A power plant, in particular a wind power plant, comprising a double-fed asynchronous machine (11), the stator (11) of which is connected to an electrical network (2) and the rotor (13) of which is connected to the electrical network (2) via a converter device (26) according to claim 20, and a control system (31) for controlling operation of the power plant (1), wherein the control system (1) specifies, as a function of network parameters and power plant parameters, demand values (P*, Q*) for the power to be provided by the power plant (1), and the control device (24) of the converter device (26) determines therefrom setpoint values for the stator power ($P_s$, $Q_s$) to be provided and the power ($P_r$, $Q_r$, $Q_n$) to be provided by the converter device (26) and controls the network-side and the rotor-side converter (18, 19) both in a normal operating mode and in a virtual inertia operating mode according to the method of anyone of the claims 1 to 19 in dependence of the power setpoints ($P_s$, $Q_s$, $P_r$, $Q_r$, $Q_n$) to be provided.

**Revendications**

1. Procédé de fonctionnement d'une centrale électrique (1) avec une machine asynchrone à double alimentation (11) dont le stator (12) est connecté à un réseau électrique (2) et dont le rotor (13) est connecté au réseau (2) par l'intermédiaire d'un onduleur (17), dans lequel la centrale électrique (1) présente un mode de fonctionnement normal dans lequel elle fonctionne conformément à une caractéristique de centrale prédéterminée, pour injecter une puissance nominale dans le réseau (2), et présente en outre un mode de fonctionnement à inertie de masse virtuelle dans lequel l'injection de puissance est augmentée au-dessus de la puissance nominale de la centrale tandis que l'énergie de rotation du rotor (4, 6, 7, 9, 13) est dissipée, dans lequel le procédé dans le mode de fonctionnement à inertie de masse virtuelle présente les étapes consistant à :

déterminer une vitesse de rotation actuelle ($n_r$) et un taux de changement de vitesse de rotation ($dn_r/dt$) du rotor (13) ou une fréquence de rotor actuelle ($f_r$) et un taux de changement de fréquence de rotor ($df_r/dt$) ;
lorsque la vitesse de rotation actuelle ($n_r$) du rotor (13) est comprise dans une plage de vitesses de rotation prédéterminée ([$n_{VM-}$; $n_{VM+}$]) autour d'une vitesse de rotation synchrone ($n_{syn}$) du rotor (13) ou que la fréquence de rotor actuelle ($f_r$) est comprise dans une plage de fréquences prédéterminée ([$f_{VM-}$; $f_{VM+}$) autour d'une fréquence nulle du rotor (13), réduire une valeur limite de courant maximale actuelle ($I_{r,max}$) pour un courant de rotor à fournir par l'onduleur (17) en fonction des valeurs actuelles déterminées de la vitesse de rotation ($n_r$) et du taux de changement de vitesse de rotation ($dn_r/dt$) ou de la fréquence ($f_r$) et du taux de changement de fréquence ($df_r/dt$) du rotor (13) ;
déterminer une valeur de consigne actuelle ($I_r$) pour le courant de rotor sur la base d'une puissance à fournir entre le réseau (2) et la machine asynchrone à double alimentation (11) en fonction de grandeurs de fonctionnement actuelles mesurées ;
commander l'onduleur (17) pour impulser des tensions et courants sinusoïdaux au rotor (13) à la valeur de consigne de courant de rotor actuelle ($I_r$) ou, si la valeur de consigne de courant de rotor maximale actuelle ($I_r$) est égale ou supérieure à la valeur limite de courant de rotor maximale actuelle ($I_{r,max}$), à la valeur limite de courant de rotor maximale actuelle ($I_{r,max}$).

2. Procédé selon la revendication 1, dans lequel la plage de vitesses de rotation prédéterminée ([$n_{VM-}$ ; $n_{VM+}$]) autour de la vitesse de rotation synchrone ($n_{syn}$) ou la plage de fréquences prédéterminée ([$f_{VM-}$ ; $f_{VM+}$]) autour d'une fréquence nulle du rotor (13) est définie par une fréquence de courant de rotor minimale prédéterminée pour le fonctionnement stationnaire ($f_r$) ou une différence de vitesse de rotation de la vitesse de rotation de rotor ($n_r$) par rapport à la vitesse de rotation synchrone ($n_{syn}$), qui se situe dans la plage de +/- 10 à 15 % de la fréquence de stator ($f_s$) ou de la vitesse de rotation synchrone ($n_{syn}$).

3. Procédé selon la revendication 1 ou 2, dans lequel la valeur limite de courant de rotor maximale ($I_{r,max}$) au moins dans une plage partielle de la plage de vitesses de rotation prédéterminée ([$n_{VM-}$; $n_{VM+}$]) ou de la plage de fréquences ([$f_{VM-}$; $f_{VM+}$]) est plus petite pour une plus petite quantité de l'écart de la vitesse de rotation actuelle ($n_r$) du rotor (13) par rapport à la vitesse de rotation synchrone ($n_{syn}$) ou pour un plus petit rapport de la fréquence de rotor à celle du stator ($f_r/f_s$) que pour une plus grande quantité de cet écart ou rapport.

4. Procédé selon l'une quelconque des revendications précédentes, dans lequel la valeur limite de courant de rotor maximale ($I_{r,max}$) au moins dans une plage partielle de la plage de vitesses de rotation prédéterminée ([$n_{VM-}$; $n_{VM+}$]) ou de la plage de fréquences ([$f_{VM-}$; $f_{VM+}$]) est plus petite pour une plus petite quantité du taux de changement de vitesse de rotation ($dn_r/dt$) ou du taux de changement de fréquence ($df_r/dt$) du rotor (13) que pour une plus grande quantité du taux de changement de vitesse de rotation ($dn_r/dt$) ou du taux de changement de fréquence ($df_r/dt$) du rotor (13).

5. Procédé selon l'une quelconque des revendications précédentes, dans lequel la valeur limite de courant de rotor maximale ($I_{r,max}$) dans plusieurs plages partielles de la plage de vitesses de rotation prédéterminée ([$n_{VM-}$; $n_{VM+}$]) ou de la plage de fréquences ([$f_{VM-}$; $f_{VM+}$]) au-dessus, au-dessous et au voisinage de la vitesse de rotation synchrone ($n_{syn}$) ou de la fréquence nulle du rotor (13) présente respectivement une valeur constante qui est respectivement plus petite que celle du fonctionnement normal.

6. Procédé selon l'une quelconque des revendications précédentes, dans lequel la valeur limite de courant de rotor maximale ($I_{r,max}$) diminue de façon continue vers la vitesse de rotation synchrone ($n_{syn}$) du rotor (13) selon une fonction mathématique de la vitesse de rotation ($n_r$) et du taux de changement de vitesse de rotation ($dn_r/dt$) ou de la fréquence ($f_r$) et du taux de changement de fréquence ($df_r/dt$) du rotor (13).

7. Procédé selon l'une quelconque des revendications précédentes, dans lequel la valeur limite de courant de rotor maximale ($I_{r,max}$) se situe sur une courbe de valeur limite et dans lequel la courbe de valeur limite pour un taux de changement de vitesse de rotation négatif ($dn_r/dt < 0$) ou un taux de changement de fréquence négatif ($df_r/dt < 0$) dans le mode de fonctionnement à inertie de masse virtuelle se situe au-dessus de la courbe de valeur limite correspondante pour un taux de changement de vitesse de rotation positif ($dn_r/dt > 0$) ou un taux de changement de fréquence positif ($df_r/dt > 0$) qui correspond à un mode de fonctionnement à récupération de vitesse de rotation.

8. Procédé selon l'une quelconque des revendications précédentes, dans lequel la valeur limite de courant de rotor maximale ($I_{r,max}$) est augmentée d'au moins 5 %, de préférence d'au moins 10 %, par rapport à la valeur limite de courant de rotor maximale pour le mode de fonctionnement normal lorsque le mode de fonctionnement à inertie de masse virtuelle est initié et est réduite d'au moins 5 %, de préférence d'au moins 10 %, lorsque le mode de fonctionnement passe de l'inertie de masse virtuelle à la récupération de vitesse de rotation.

9. Procédé selon l'une quelconque des revendications précédentes, dans lequel la valeur limite de courant de rotor maximale est en outre déterminée en fonction d'au moins une température de fonctionnement ($T_1...T_k$) mesurée au niveau de l'onduleur (17), de préférence plusieurs températures de fonctionnement mesurées au niveau de l'onduleur.

10. Procédé selon l'une quelconque des revendications précédentes, dans lequel la valeur limite de courant de rotor maximale ($I_{r,max}$) est en outre déterminée en fonction d'une fréquence de commutation ($f_{sw}$) de composants semi-conducteurs de puissance de l'onduleur (17),
dans lequel la fréquence de commutation ($f_{sw}$) pour les commutateurs à semi-conducteurs de puissance de l'onduleur (17) est réduite dans la plage de vitesses de rotation prédéterminée ([$n_{VM-}$; $n_{VM+}$]) ou la plage de fréquences prédéterminée ([$f_{VM-}$; $f_{VM+}$]) en fonction de la vitesse de rotation ($n_r$) et du taux de changement de vitesse de rotation ($dn_r/dt$) ou de la fréquence ($f_r$) et du taux de changement de fréquence ($df_r/dt$) du rotor (13).

11. Procédé selon l'une quelconque des revendications précédentes, dans lequel un appareil de commande (24) pour l'onduleur (17) détecte automatiquement un dépassement sous une valeur seuil de la fréquence de réseau en dessous de la fréquence nominale de réseau pendant une durée de valeur seuil prédéterminée comme en tant que besoin d'une stabilisation de fréquence de réseau par le mode de fonctionnement à inertie de masse virtuelle puis active automatiquement le mode de fonctionnement à inertie de masse virtuelle, dans lequel la valeur seuil de la fréquence de réseau et/ou la durée de valeur seuil est ou sont prédéterminées directement par un système de commande de niveau supérieur (31) pour la centrale électrique (1) ou par l'appareil de commande (24).

12. Procédé selon l'une quelconque des revendications précédentes, dans lequel un mode de fonctionnement de récupération de vitesse de rotation après la fin du mode de fonctionnement à inertie de masse virtuelle est détecté à l'aide d'un changement du signe du taux de changement de vitesse de rotation ($dn_r/dt$) et du taux de changement de fréquence ($df_r/dt$) du rotor (13), puis la valeur limite de courant de rotor ($I_{r,max}$) est réglée sur une courbe de valeur limite pour la récupération de vitesse de rotation.

13. Procédé selon l'une quelconque des revendications précédentes, dans lequel l'onduleur (17) présente un convertisseur côté rotor (18), qui est connecté au rotor (13) de la machine asynchrone (11), et un convertisseur côté réseau (19), qui est connecté d'une part au réseau (2) et d'autre part au convertisseur côté rotor (18) par l'intermédiaire d'un circuit intermédiaire à tension continue (21).

**14.** Procédé selon la revendication 13, dans lequel la puissance active ($P_r$) à fournir par le convertisseur côté rotor (18) est déterminée en fonction d'une demande de puissance active ($P_r^*$), de sorte que la valeur de consigne de courant de rotor résultante ($I_r$) ne dépasse pas la valeur limite de courant de rotor maximale actuelle ($I_{r,max}$).

**15.** Procédé selon la revendication 13 ou 14, dans lequel la puissance réactive ($Q_r$) à fournir par le convertisseur côté rotor (18) est déterminée en fonction d'une demande de puissance réactive ($Q_r^*$) et de la puissance active fournie ($P_r$) de sorte que la valeur de consigne de courant de rotor résultante ($I_r$) ne dépasse pas la valeur limite de courant de rotor maximale ($I_{r,max}$).

**16.** Procédé selon la revendication 14 ou 15, dans lequel dans le cas où la puissance active ($P_r$) actuellement fournie par le convertisseur côté rotor (18) est inférieure à la demande de puissance active actuelle ($P_r^*$), la puissance réactive ($Q_r$) fournie par le convertisseur côté rotor (18) est réduite à zéro.

**17.** Procédé selon l'une quelconque des revendications 14-16, dans lequel le convertisseur côté rotor (18) et le convertisseur côté réseau (19) fonctionnent pour fournir uniquement de la puissance active ($P_r$, $P_n$).

**18.** Procédé selon l'une quelconque des revendications précédentes, dans lequel une valeur limite de courant de réseau maximale actuelle ($I_{n,max}$) pour le convertisseur côté réseau (19) dans la plage de vitesses de rotation prédéterminée ($[n_{VM-}; n_{VM+}]$) ou la plage de fréquences prédéterminée ($[f_{VM-}; f_{VM+}]$) est augmentée en fonction des valeurs actuelles déterminées de la vitesse de rotation ($n_r$) et du taux de changement de vitesse de rotation ($dn_r/dt$) ou de la fréquence ($f_r$) et du taux de changement de fréquence ($df_r/dt$) du rotor (13) et de la demande de puissance ($P^*$, $Q^*$).

**19.** Procédé selon l'une quelconque des revendications 14-18, dans lequel la puissance réactive ($Q_n$) à fournir par le convertisseur côté réseau (19) est déterminée pour compenser au moins partiellement une fourniture de puissance réactive insuffisante par le convertisseur côté rotor (18), à condition que la valeur de consigne de courant de réseau résultante ($I_n$) ne dépasse pas la valeur limite de courant de réseau maximale ($I_{r,max}$).

**20.** Dispositif d'onduleur (26) pour une machine asynchrone à double alimentation (11) d'une centrale électrique (1), dont le stator (11) est directement connecté à un réseau électrique (2) et dont le rotor (13) est connecté au réseau (2) par l'intermédiaire du dispositif d'onduleur (26),

avec un convertisseur côté rotor (18) qui est configuré pour être connecté au rotor (13) de la machine asynchrone (11),
avec un convertisseur côté réseau (19) qui est configuré pour être connecté au réseau (2) et qui est connecté au convertisseur côté rotor (18) par l'intermédiaire d'un circuit intermédiaire à tension continue (21) ; et
avec un appareil de commande (24) pour commander le fonctionnement du dispositif d'onduleur (26), dans lequel l'appareil de commande (24) présente des moyens (30) pour communiquer avec un système de commande de niveau supérieur (31) de la centrale électrique (1) et est configuré pour mettre en œuvre un procédé de fonctionnement de la centrale électrique (1) selon l'une quelconque des revendications précédentes.

**21.** Centrale électrique, en particulier centrale éolienne, avec une machine asynchrone à double alimentation (11), dont le stator (11) est connecté à un réseau électrique (2) et dont le rotor (13) est connecté au réseau électrique (2) par l'intermédiaire d'un dispositif d'onduleur (26) selon la revendication 20, et avec un système de commande (31) pour commander le fonctionnement de la centrale électrique (1), dans lequel le système de commande (1) spécifie des valeurs de demande ($P^*$, $Q^*$) pour la puissance à fournir par la centrale électrique (1) en fonction de paramètres de réseau et de paramètres de centrale électrique et l'appareil de commande (24) du dispositif d'onduleur (26) détermine à partir de cela des valeurs de consigne pour la puissance de stator à fournir ($P_s$, $Q_s$) et la puissance à fournir ($P_r$, $Q_r$, $Q_n$) par le dispositif d'onduleur (26) et commande les convertisseurs côté réseau et côté rotor (18, 19) à la fois dans le mode de fonctionnement normal et dans le mode de fonctionnement à inertie de masse virtuelle selon le procédé de l'une quelconque des revendications 1 à 19 en fonction des valeurs de consigne de puissance à fournir ($P_s$, $Q_s$, $P_r$, $Q_r$, $Q_n$).

Fig. 1

EP 3 644 497 B1

Fig. 2b

Fig. 2a

Fig. 4b

Fig. 4a

41

S1

Betriebsmodus der virtuellen
Massenträgheit aktivieren

S2

aktuelle Drehzahl und Drehzahländerungsrate
des Rotors bestimmen

S3

aktuellen maximalen Rotorstromgrenzwert im vorbestimmten
Drehzahlbereich um die Synchrondrehzahl herum in
Abhängigkeit von den aktuellen Werten der Drehzahl und
Drehzahländerungsrate des Rotors bestimmen

S4

aktuellen Rotorstromsollwert basierend auf
Sollleistungsanforderung in Anhängigkeit von
gemessen aktuellen Betriebsgrößen bestimmen

S5

Umrichter entsprechend dem aktuellen
Rotorstromsollwert, begrenzt auf den aktuellen
maximalen Rotorstromgrenzwert ansteuern

Fig. 3

Fig. 5

Fig. 6

43

S11

S13

S12

Normalbetrieb

Nein

Betriebsart der
Drehzahlerholung aktiv?

Nein

Betriebsart Virtuelle
Massenträgheit aktiv?

Ja

Ja

Erfassung der Rotordrehzahlwerte $n_r$, $dn_r/dt$
(und der Temperaturen $T_1,...,T_k$)

S14

Bestimmung des Rotorstromgrenzwertes in
Abhängigkeit von $n_r$, $dn_r/dt$ ,($T_1,...,T_k$)

S15

Bestimmung des rotorseitigen Stroms unter
Berücksichtigung von P*, Q*

S16

Bestimme die Rotorwirkleistung $P_r$
entprechend P* bis $I_{r(VM/DE)} \leq I_{r,max(VM/DE)}$

S17

Bestimme die Rotorblindleistung $Q_r$ entpr.
$P_r$ und Q* bis $I_{r(VM/DE)} \leq I_{r,max(VM/DE)}$

S18

Umrichter ansteuern

S19

Fig. 7

44

S11

S13

Normalbetrieb

S12

Nein

Betriebsart der
Drehzahlerholung aktiv?

Nein

Betriebsart Virtuelle
Massenträgheit aktiv?

Ja

Ja

Erfassung der Rotordrehzahlwerte $n_r$, $dn_r/dt$
(und der Temperaturen $T_1,...,T_k$)

S14

Bestimmung des Stromgrenzwerte von
Rotor- und Netzseite in Abhängigkeit von
$n_r$, $dn_r/dt$, $(T_1,...,T_k)$

S21

Bestimmung der Ströme von Rotor-,
Netzseite unter Berücksichtigung von $P^*$, $Q^*$

S22

Bestimme $P_r$ entprechend $P^*$
bis $I_{r(VM/DE)} \leq I_{r,max(VM/DE)}$

S23

Reduziere die Rotorblindleistung zu $Q_r=0$

S24

Bestimme $P_n$ entprechend $P_r$
bis $I_{n(VM/DE)} \leq I_{n,max(VM/DE)}$

S25

Bestimme $Q_n$ entsprechend $Q^*$
bis $I_{n(VM/DE)} \leq I_{n,max(VM/DE)}$

S26

Umrichter ansteuern

S27

Fig. 8

Fig. 9

Fig. 11

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5610543 A
- US 8035240 B2
- US 20160348646 A1
- US 9548690 B2
- WO 2015014368 A1
- DE 102010014165 A1

**In der Beschreibung aufgeführte Nicht-Patentliteratur**

- **XIAORONG ZHU.** Virtual inertia control of DFIG-based wind turbines for dynamic grid frequency support. *Proceedings of the IET Renewable Power Generation Conference, Edinburgh, UK,* 06. September 2011, 1-6